# EUROPÄISCHE PATENTSCHRIFT

(11) **EP 3 112 210 B1**
(45) Veröffentlichungstag und Bekanntmachung des Hinweises auf die Patenterteilung: **12.12.2018**
(21) Anmeldenummer: 16173253.2
(22) Anmeldetag: 07.06.2016
(51) Int. Cl.: B60N 2/90, B60N 2/28

(54) **KINDERSITZVORRICHTUNG**
CHILD CAR SEAT DEVICE
SYSTEME DE SIEGE ENFANT

(30) Priorität: 09.06.2015 DE 102015109108
(43) Veröffentlichungstag der Anmeldung: 04.01.2017
(73) Patentinhaber: RECARO Child Safety GmbH & Co. KG, 95352 Marktleugast (DE)
(72) Erfinder: Schwabbauer, Frank, 95339 Neuenmarkt (DE); Völk, Matthias, 96317 Kronach (DE)
(74) Vertreter: Daub, Thomas

(56) Entgegenhaltungen:
- DE-A1-102007 059 667
- DE-U1-202011 002 071
- US-A1- 2010 060 052

## Beschreibung

### Stand der Technik

Die Erfindung betrifft eine Kindersitzvorrichtung nach dem Oberbegriff des Patentanspruchs 1.

Es ist bereits eine Kindersitzvorrichtung mit einer Sitzbodeneinheit, die eine Sitz- und/oder Liegefläche für ein Kind bereitstellt, mit einem zu der Sitzbodeneinheit in zumindest einer Richtung verstellbaren Kopfteil, das zur Ausbildung eines zumindest für den Kopf des Kindes vorgesehenen Auflagebereichs vorgesehen ist, mit einer Verriegelungsvorrichtung, die dazu vorgesehen ist, das Kopfteil in zumindest zwei verschiedenen Stellungen zu der Sitzbodeneinheit zu verriegeln, mit einem integrierten Gurtsystem, welches zumindest zur Sicherung des Kindes bis zu einer Maximal-Kleinkindhöhe vorgesehen ist, und mit einer Verstauvorrichtung, mittels der das integrierte Gurtsystem ab einer Höhe, die größer ist als die Maximal-Kleinkindhöhe, verstaubar ist, vorgeschlagen worden. Die DE20201100207 U1 offenbart eine Kindersitzvorrichtung mit einer Sitzbodeneinheit, die eine Sitz- und/oder Liegefläche für ein Kind bereitstellt, mit einem zu der Sitzbodeneinheit in zumindest einer Richtung verstellbaren Kopfteil, das zur Ausbildung eines zumindest für den Kopf des Kindes vorgesehenen Auflagebereichs vorgesehen ist, mit zumindest einer Verriegelungsvorrichtung, die dazu vorgesehen ist, das Kopfteil in zumindest zwei verschiedenen Stellungen zu der Sitzbodeneinheit zu verriegeln, mit einem integrierten Gurtsystem, welches zumindest zur Sicherung des Kindes bis zu einer Maximal-Kleinkindhöhe vorgesehen ist, und mit einer Verstauvorrichtung, mittels der das integrierte Gurtsystem ab einer Höhe, die größer ist als die Maximal-Kleinkindhöhe, verstaubar ist, wobei die Verriegelungsvorrichtung und die Verstauvorrichtung zumindest teilweise funktionell miteinander verknüpft sind.

Die Aufgabe der Erfindung besteht insbesondere darin, eine gattungsgemäße Vorrichtung mit verbesserten Eigenschaften hinsichtlich Komfort und Bedienerfreundlichkeit bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Die Erfindung geht aus von einer Kindersitzvorrichtung mit einer Sitzbodeneinheit, die eine Sitz- und/oder Liegefläche für ein Kind bereitstellt, mit einem zu der Sitzbodeneinheit in zumindest einer Richtung verstellbaren Kopfteil, das zur Ausbildung eines zumindest für den Kopf des Kindes vorgesehenen Auflagebereichs vorgesehen ist, mit einer Verriegelungsvorrichtung, die dazu vorgesehen ist, das Kopfteil in zumindest zwei verschiedenen Stellungen zu der Sitzbodeneinheit zu verriegeln, mit einem integrierten Gurtsystem, welches zumindest zur Sicherung des Kindes bis zu einer Maximal-Kleinkindhöhe vorgesehen ist, und mit einer Verstauvorrichtung, mittels der das integrierte Gurtsystem ab einer Höhe, die größer ist als die Maximal-Kleinkindhöhe, verstaubar ist Es wird vorgeschlagen, dass die Verriegelungsvorrichtung und die Verstauvorrichtung zumindest teilweise funktionell miteinander verknüpft sind. Unter einer "Sitzbodeneinheit" soll dabei insbesondere eine Einheit eines Kindersitzes verstanden werden, die zumindest eine Sitzfläche für ein Kind bereitstellt. Die Sitzbodeneinheit umfasst dabei wenigstens ein Sitzpolster, das die Sitzfläche ausbildet, und einen Grundkörper, mit dem die Sitzbodeneinheit auf einem Fahrzeugsitz eines Fahrzeugs aufgesetzt werden kann. Unter einem "verstellbaren Kopfteil" soll dabei insbesondere ein Element verstanden werden, an dem ein in dem Kindersitz sitzendes Kind insbesondere seinen Kopf abstützen kann, wobei das Kopfteil dabei in einer Höhe zu der Sitzbodeneinheit verstellbar ist, um den Kindersitz für Kinder unterschiedlicher Größen optimal einstellen zu können. Unter einer "Verriegelungsvorrichtung" soll dabei insbesondere eine Vorrichtung verstanden werden, die zur Verriegelung zweier zueinander beweglicher Elemente vorgesehen ist, wobei die Verriegelungsvorrichtung dabei insbesondere zur Verriegelung des Kopfteils in verschiedenen Stellungen zu der Sitzbodeneinheit vorgesehen ist. Dabei wird die Verriegelungsvorrichtung zur Verstellung des Kopfteils zu der Sitzbodeneinheit wenigstens kurzzeitig entriegelt, sodass eine Verstellung des Kopfteils zu der Sitzbodeneinheit ermöglicht wird. Nach der Verstellung des Kopfteils in die gewünschte Stellung zu der Sitzbodeneinheit wird das Kopfteil mittels der Verriegelungsvorrichtung wieder verriegelt, wodurch das Kopfteil zu der Sitzbodeneinheit fixiert ist und nicht zu der Sitzbodeneinheit bewegt werden kann. Unter einem "integrierten Gurtsystem" soll dabei insbesondere ein für ein Kleinkind vorgesehenes, fest mit dem Kindersitz verbundenes Gurtsystem verstanden werden, das insbesondere zur Sicherung von Kleinkindern unter 20 kg und/oder unter einer Größe von 105 cm vorgesehen ist. Dabei handelt es sich bei dem integrierten Gurtsystem vorzugsweise um ein 5-Punkt-Gurtsystem, das mehrere miteinander verbundene Gurte umfasst, die über ein gemeinsames Gurtschloss zum Sichern des Kindes miteinander verbunden werden können. Dabei ist das interne Gurtsystem insbesondere unterschiedlich von einem externen, fahrzeugseitigen Gurtsystem, welches fest in dem Fahrzeug integriert ist. Unter "wenigstens zwei verschiedenen Stellungen des Kopfteils" sollen dabei insbesondere wenigstens zwei Stellungen des Kopfteils verstanden werden, in denen das Kopfteil wenigstens zwei unterschiedliche Abstände zu der Sitzbodeneinheit aufweist, also in zwei unterschiedlichen Höhen zu der Sitzbodeneinheit angeordnet ist. Unter einer "Maximal-Kleinkindhöhe" soll dabei insbesondere eine maximale Höhe verstanden werden, um die das Kopfteil zu der Sitzbodeneinheit verschoben werden kann und gleichzeitig noch das interne Gurtsystem verwendet werden kann. Die Maximal-Kleinkindhöhe ist dabei eine Höhe, in der ein Kind mit einer Größe von 105 cm sicher sitzen kann. Unter einer "Verstauvorrichtung" soll dabei insbesondere eine Vorrichtung verstanden werden, in der wenigstens ein Element, wie insbesondere wenigstens ein Element des integrierten Gurtsystems, verliersicher verstaubar ist und dabei eine weitere Funktion des Kindersitzes nicht beeinträchtigt. Unter "zumindest teilweise funktionell miteinander verknüpft" soll dabei insbesondere verstanden werden, dass zwei Vorrichtungen oder Elemente, wie insbesondere die Verriegelungsvorrichtung und die Verstauvorrichtung, sich in ihrer Funktion wenigstens teilweise ergänzen, wobei die Verriegelungsvorrichtung und die Verstauvorrichtung dabei vorzugsweise an derselben Stelle angeordnet sind und wenigstens ein gemeinsames Bauteil aufweisen. Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt. Dadurch kann ein besonders vorteilhafter Kindersitz bereitgestellt werden, in dem insbesondere ein integriertes Gurtsystem vorteilhaft verstaut werden kann und dabei zusätzlich eine Entriegelung des Kopfteils bewirkt wird. Dadurch kann insbesondere eine vorteilhafte Benutzung des Kindersitzes erreicht werden.

Weiter wird vorgeschlagen, dass die Verriegelungsvorrichtung wenigstens einen Ver- und Entriegelmechanismus aufweist, welcher zumindest teilweise in einem Stauraum der Verstauvorrichtung angeordnet ist. Unter einem "Ver- und Entriegelmechanismus" soll dabei insbesondere ein Mechanismus verstanden werden, mittels dessen zwei Elemente in wenigstens einem Verriegelungszustand in einer fixen Position zueinander fixiert werden können oder in wenigstens einem Entriegelzustand zumindest um einen definierten Verfahrweg zueinander bewegbar sind. Dabei weist der Ver- und Entriegelmechanismus vorzugsweise mehrere Verriegelzustände auf, in denen die beiden Elemente in verschiedenen Positionen fix zueinander fixiert werden können. Dadurch kann der Kindersitz vorteilhaft kompakt ausgebildet werden, da insbesondere die Verstauvorrichtung und die Verriegelungsvorrichtung zumindest teilweise in demselben Bauraum angeordnet sind.

Ferner wird vorgeschlagen, dass das integrierte Gurtsystem wenigstens ein Formschlusselement zum Schließen des Gurtsystems aufweist, welches dazu vorgesehen ist, den Ver- und Entriegelmechanismus zumindest teilweise zu entriegeln. Unter einem "Formschlusselement" soll dabei insbesondere ein Element verstanden werden, das dazu vorgesehen ist, mittels eines Formschlusses mit wenigstens einem weiteren, korrespondierend ausgebildeten Formschlusselement verbindbar zu sein. Das Formschlusselement ist dabei vorzugsweise als eine Gurtzunge ausgebildet, die wenigstens eine Platte, vorzugsweise aus einem Metall, aufweist, in die ein Durchgangsloch eingebracht ist. Unter "zumindest teilweise entriegeln" soll dabei insbesondere verstanden werden, dass eine Entriegelung durch den Ver- und Entriegelmechanismus wenigstens teilweise, vorzugsweise komplett durch das Formschlusselement zum Schließen des Gurtsystems erfolgt. Dadurch kann der Ver- und Entriegelmechanismus vorteilhaft einfach von einem Teil des integrierten Gurtsystems entriegelt werden und der entsprechende Teil des Gurtsystems sicher verstaut werden.

Zudem wird vorgeschlagen, dass das Gurtsystem wenigstens ein Umlenkelement aufweist, welches zur Umlenkung von zumindest einem rückenlehnenseitigen Gurtelement vorgesehen ist und zwischen einer Minimalhöhe und der Maximal-Kleinkindhöhe in wenigstens einem Führungselement verschiebbar ist. Unter einem "Umlenkelement" soll dabei insbesondere ein Element verstanden werden, über das eine Ausrichtung eines Gurtelements verändert wird, wobei insbesondere eine Kraftübertragung zwischen den beiden unterschiedlich ausgerichteten Teilbereichen des Gurtelements gewährleistet ist. Das Umlenkelement ist insbesondere dazu vorgesehen, eine in das Gurtelement eingeleitete Kraft entsprechend dem Verlauf des Gurtelements umzulenken, wobei das Umlenkelement dabei dazu vorgesehen ist, eine Kraft aufzunehmen und abzuleiten. Das Umlenkelement ist dabei vorzugsweise dazu vorgesehen, das Gurtelement von einer im Wesentlich parallel zu der Rückenlehneneinheit verlaufenden Ausrichtung in eine im Wesentlichen orthogonal zu der Rückenlehneneinheit verlaufende Ausrichtung umzulenken, sodass das Gurtelement von einer Anbindung an dem Kindersitz in Richtung der Sitzfläche des Kindersitzes vor der Rückenlehneneinheit umgelenkt werden kann. Das Umlenkelement ist dabei vorzugsweise als ein Rundstab ausgebildet, wobei der Rundstab dabei vorzugsweise als ein Rohr ausgebildet ist. Unter einem "rückenlehnenseitigen Gurtelement" soll dabei insbesondere ein Teil des Gurtsystems verstanden werden, das fest mit einem Rückenelement des Kindersitzes verbunden ist und während eines Gebrauchs von dem Rückenelement des Kindersitzes aus durch ein Polster des Rückenelements nach vorne in Richtung einer Rückenlehnenfläche des Kindersitzes geführt ist. Unter einer "Minimalhöhe" soll dabei insbesondere eine geringste Höhe verstanden werden, in der das zumindest eine rückenlehnenseitige Gurtelement zu einem Sitzboden des Kindersitzes über das Umlenkelement umgelenkt werden kann. Dabei wird das rückenlehnenseitige Gurtelement insbesondere zur Sicherung von möglichst kleinen, in dem Kindersitz zu sichernden Kleinkindern auf die Minimalhöhe eingestellt. Unter einem "Führungselement" soll dabei insbesondere ein Element verstanden werden, das dazu vorgesehen ist, wenigstens ein weiteres Element, wie insbesondere das Umlenkelement, entlang einer definierten Führungsgeometrie zu führen, wobei das Führungselement dazu vorzugsweise in einem formschlüssigen Kontakt mit dem zu führenden Element steht. Das Führungselement ist dabei vorzugsweise als eine Führungsnut ausgebildet, in der das zu führende Element, wie insbesondere das Umlenkelement, formschlüssig angeordnet ist. Grundsätzlich ist es auch denkbar, dass das Führungselement als eine Führungsschiene, als eine einfache Anlagefläche oder als ein anderes, zur Führung eines Elements geeignetes Element ausgebildet sein kann. Dadurch kann das Gurtsystem zur Sicherung von unterschiedlich großen Kleinkindern vorteilhaft variabel ausgebildet werden.

Es wird weiter vorgeschlagen, dass das wenigstens eine Umlenkelement dazu vorgesehen ist, in der Maximal-Kleinkindhöhe von einer Hochbewegung des Kopfteils entkoppelt zu werden. Unter einer "Hochbewegung des Kopfteils" soll dabei insbesondere eine Bewegung des Kopfteils relativ zu der Rückenlehne und dem Sitzboden verstanden werden, wobei bei einer Hochbewegung ein Abstand eines oberen Endes des Kopfteils zu dem Sitzboden vergrößert wird und der Kindersitz so insbesondere für die sichere Beförderung von größeren Kindern eingestellt werden kann. Unter einem "Entkoppeln" soll dabei insbesondere verstanden werden, dass eine Bewegung des Umlenkelements von einer weiteren Hochbewegung des Kopfteils nicht mehr beeinflusst wird. Dadurch kann das interne Gurtsystem ab der Maximal-Kleinkindhöhe besonders einfach und vorteilhaft von einer weiteren Verstellung des Kopfteils entkoppelt werden.

Weiterhin wird vorgeschlagen, dass das wenigstens eine Führungselement an einem oberen Ende zur Entkopplung des Umlenkelements schräg ausgebildet ist. Unter einem "oberen Ende des Führungselements" soll dabei insbesondere ein Ende des Führungselements verstanden werden, das von dem Sitzboden des Kindersitzes abgewandt ist. Unter "schräg ausgebildet" soll dabei insbesondere verstanden werden, dass das Führungselement einen oberen Bereich aufweist, der zu einem unteren, im Wesentlichen parallel zu einer Erstreckung einer Rückenlehneneinheit verlaufenden Bereich abgewinkelt verläuft. Dadurch kann eine Entkopplung des Umlenkelements von einer Hochbewegung des Kopfteils besonders einfach erfolgen.

Zudem wird vorgeschlagen, dass die Kindersitzvorrichtung zumindest eine Rückenlehneneinheit aufweist, die mit der Sitzbodeneinheit gekoppelt ist, die das wenigstens eine Führungselement ausbildet, in der das wenigstens eine Umlenkelement geführt ist. Unter einer "Rückenlehneneinheit" soll dabei insbesondere eine Einheit verstanden werden, die, in Sitzrichtung gesehen, an einem hinteren Ende der Sitzbodeneinheit angeordnet und vorzugsweise starr mit der Sitzbodeneinheit verbunden ist und sich von der Sitzbodeneinheit aus nach oben erstreckt und einen Rückenlehnenbereich ausbildet. Grundsätzlich ist es auch denkbar, dass die Rückenlehneneinheit über eine Kinematik dynamisch mit der Sitzbodeneinheit gekoppelt ist, beispielsweise für eine Transportverkleinerung, bei der der Kindersitz möglichst platzsparend zusammengeklappt werden kann. Unter "gekoppelt" soll dabei in diesem Zusammenhang insbesondere miteinander verbunden verstanden werden, wobei die beiden miteinander verbundenen Elemente oder Einheiten, wie insbesondere die Rückenlehneneinheit und die Sitzbodeneinheit, dabei direkt miteinander verbunden oder über wenigstens ein weiteres Element indirekt miteinander verbunden sein können. Dabei können die miteinander gekoppelten Elemente oder Einheiten starr und unbeweglich miteinander verbunden sein oder dynamisch, also in einem definierten Bereich zueinander beweglich. Dadurch kann das Gurtsystem besonders einfach und vorteilhaft in den Kindersitz integriert werden.

Erfindungsgemäß wird vorgesehen, dass die Kindersitzvorrichtung wenigstens eine Verstelleinheit, mittels der wenigstens die Sitzbodeneinheit zwischen wenigstens einer Sitz- und einer Schlafstellung verstellbar ist, und eine zweite Verriegelungsvorrichtung aufweist, die dazu vorgesehen ist, die Verstelleinheit in wenigstens der Sitzstellung zu sperren, wobei die zweite Verriegelungsvorrichtung und die Verstauvorrichtung zumindest teilweise funktionell miteinander verknüpft sind. Unter einer "Verstelleinheit" soll in diesem Zusammenhang insbesondere eine Einheit verstanden werden, mittels der ein Teil der Sitzbodeneinheit und vorzugsweise die mit der Sitzbodeneinheit verbundene Rückenlehneneinheit zwischen zumindest zwei, vorzugsweise drei Positionen verstellbar, insbesondere verschwenkbar sind. Dabei ist der Teil der Sitzbodeneinheit mittels der Verstelleinheit in den verschiedenen Positionen arretierbar. Durch die verschiedenen Positionen können zumindest eine Sitzposition, eine Komfortposition und eine Schlafposition bereitgestellt werden. Dabei ist die Sitzbodeneinheit mittels der Verstelleinheit vorzugsweise in eine 0-Grad-Stellung, in eine 4-Grad-Stellung und in eine 12-Grad-Stellung verstellbar. Unter einem "Teil der Sitzbodeneinheit" soll dabei insbesondere ein Teil der Sitzbodeneinheit, wie insbesondere der Sitzboden, verstanden werden, der eine Sitzfläche des Kindersitzes ausbildet. Dabei ist ein weiterer Teil der Sitzbodeneinheit, insbesondere ein nicht mittels der Verstelleinheit verstellbarer Teil der Sitzbodeneinheit, als ein Grundkörper ausgebildet, der eine Auflagefläche ausbildet, mit der der Kindersitz auf einem Untergrund, insbesondere auf einem Kraftfahrzeugsitz, aufliegt. Unter einer "zweiten Verriegelungsvorrichtung zur Sperrung der Verstelleinheit" soll dabei insbesondere eine Einheit verstanden werden, die dazu vorgesehen ist, in wenigstens einem Betriebszustand die Verstelleinheit zu blockieren, sodass eine Verstellung der Sitzbodeneinheit aus einer definierten Position, wie insbesondere der Sitzposition, nicht möglich ist. Die zweite Verriegelungsvorrichtung ist dabei vorzugsweise in der Sitzbodeneinheit angeordnet und insbesondere vor der Sitzbodeneinheit ausgebildet. Dadurch kann vorteilhaft durch Verstauen des integrierten Gurtsystems die Verstellvorrichtung verriegelt werden und so insbesondere eine fehlerhafte Benutzung des Kindersitzes vermieden werden.

Weiterhin wird vorgeschlagen, dass die zweite Verriegelungsvorrichtung wenigstens einen Ver- und Entriegelmechanismus aufweist, welcher zumindest teilweise in einem weiteren Stauraum der Verstauvorrichtung angeordnet ist. Unter einem "weiteren Stauraum" soll dabei insbesondere ein von dem einen Stauraum der Verstauvorrichtung unterschiedlicher Stauraum verstanden werden, wobei der weitere Stauraum, in dem der Ver- und Entriegelmechanismus der zweiten Verriegelungsvorrichtung angeordnet ist, in die Sitzbodeneinheit eingebracht ist. Dadurch kann die zweite Verriegelungsvorrichtung besonders einfach und vorteilhaft ausgebildet werden.

Ferner wird vorgeschlagen, dass der Ver- und Entriegelmechanismus wenigstens ein Sperrelement aufweist, das den weiteren Stauraum der Verstauvorrichtung in wenigstens einem Betriebszustand versperrt. Unter einem "Sperrelement" soll dabei insbesondere ein Element verstanden werden, das einen Zugang, insbesondere einen Zugang zu dem Stauraum, in der Form versperrt, dass ein Element, wie insbesondere das als Gurtschloss ausgebildete Formschlusselement, in einem gesperrten Zustand nicht in den Stauraum eingebracht werden kann. Unter dem wenigstens einen "Betriebszustand" soll in diesem Zusammenhang insbesondere ein Betriebszustand verstanden werden, in dem die Sitzbodeneinheit aus ihrer Sitzposition herausgefahren ist. Ist die Sitzbodeneinheit in der Sitzposition ausgerichtet, gibt das Sperrelement den weiteren Stauraum der Verstauvorrichtung frei, wodurch das als Gurtschloss ausgebildete Formschlusselement in diesem Betriebszustand in den Stauraum eingebracht werden kann und dadurch den Ver- und Entriegelmechanismus entsperrt. Dadurch kann eine Sperrung der Verstelleinheit über den Ver- und Entriegelmechanismus, wenn die Sitzbodeneinheit nicht in die Sitzeinheit verstellt ist, vorteilhaft verhindert werden.

Es wird zudem vorgeschlagen, dass das integrierte Gurtsystem wenigstens ein als Gurtschloss ausgebildetes Formschlusselement aufweist, welches dazu vorgesehen ist, zur Verriegelung der zweiten Verriegelungsvorrichtung in dem weiteren Stauraum der Verstauvorrichtung eingerastet zu werden. Dadurch kann das als Gurtschloss ausgebildete Formschlusselement des integrierten Gurtsystems bei Nichtgebrauch besonders einfach und vorteilhaft in der Kindersitzvorrichtung verstaut werden.

Weiter wird vorgeschlagen, dass die Kindersitzvorrichtung zumindest eine Signalvorrichtung aufweist, die dazu vorgesehen ist, ein Signal auszugeben, wenn das Kopfteil die Maximal-Kleinkindhöhe erreicht hat. Unter einer "Signalvorrichtung" soll dabei insbesondere eine Vorrichtung verstanden werden, die in einem Auslösezustand ein visuelles, akustisches und/oder ein taktiles Signal ausgibt, insbesondere um einen Benutzer auf eine bestimmte Situation, wie insbesondere das Erreichen der Maximal-Kleinkindhöhe, aufmerksam zu machen. Dadurch kann einem Benutzer vorteilhaft das Erreichen der Maximal-Kleinkindhöhe angezeigt werden.

Zudem wird vorgeschlagen, dass die Kindersitzvorrichtung zumindest eine Sensoreinheit aufweist, die dazu vorgesehen ist, in einem Zustand, in dem ein auf der Sitzbodeneinheit sitzendes Kind für die Benutzung des integrierten Gurtsystems ungeeignet ist, ein Signal auszugeben. Unter einer "Sensoreinheit" soll dabei insbesondere eine Einheit zum Erfassen einer physikalischen Eingangsgröße, wie beispielsweise des Gewichts eines auf dem Kindersitz sitzenden Kindes, verstanden werden, die aufgrund der Eingangsgröße ein entsprechendes Signal ausgibt. Ein Signal kann dabei als ein mechanisch ausgelöstes visuelles, akustisches oder taktiles Signal ausgebildet sein. Grundsätzlich ist es auch denkbar, dass das Signal als ein elektrisches oder elektronisches Signal ausgebildet ist. Dadurch kann einem Bediener vorteilhaft signalisiert werden, wann ein Kind nicht mit dem integrierten Gurtsystem angeschnallt werden sollte.

Weiterhin wird vorgeschlagen, dass der Ver- und Entriegelmechanismus dazu vorgesehen ist, das Kopfteil in einem ersten Gebrauchszustand, in dem das integrierte Gurtsystem genutzt wird, auf eine Maximal-Kleinkindhöhe zu begrenzen. Unter einem "ersten Gebrauchszustand des Kopfteils" soll dabei insbesondere ein Zustand verstanden werden, in dem ein auf dem Kindersitz sitzendes Kind mit dem integrierten Gurtsystem an dem Kindersitz gesichert ist. Unter "auf die "Maximal-Kleinkindhöhe begrenzen" soll dabei insbesondere verstanden werden, dass das Kopfteil in dem ersten Gebrauchszustand, in dem ein in dem Kindersitz sitzendes Kind mittels des internen Gurtsystems gesichert ist, nur bis zu der Maximal-Kleinkindhöhe hochgefahren werden kann. Dadurch kann vorteilhaft sichergestellt werden, dass das interne Gurtsystem lediglich bis zu einer entsprechend zugelassenen Größe von Kindern verwendet werden kann, wodurch insbesondere eine Sicherheit vorteilhaft erhöht werden kann.

Ferner wird vorgeschlagen, dass der Ver- und Entriegelmechanismus bei einer Entriegelung dazu vorgesehen ist, das Kopfteil über die Maximal-Kleinkindhöhe hinaus freizugeben. Unter "das Kopfteil freigeben" soll dabei insbesondere verstanden werden, dass das Kopfteil, über die Maximal-Kleinkindhöhe hinaus, bis auf eine absolute Maximalstellung, in der das Kopfteil so weit wie möglich von dem Sitzboden entfernt ist, verstellt werden kann. Dadurch kann das Kopfteil nach Verstauung des internen Gurtsystems vorteilhaft weiter ausgefahren werden, um für größere Kinder eine größtmögliche Sicherheit bereitzustellen.

Die erfindungsgemäße Kindersitzvorrichtung soll hierbei nicht auf die oben beschriebene Anwendung und Ausführungsform beschränkt sein. Insbesondere kann die erfindungsgemäße Kindersitzvorrichtung zu einer Erfüllung einer hierin beschriebenen Funktionsweise eine von einer hierin genannten Anzahl von einzelnen Elementen, Bauteilen und Einheiten abweichende Anzahl aufweisen.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine schematische Darstellung eines Kindersitzes mit einer erfindungsgemäßen Kindersitzvorrichtung in einer Minimalstellung eines Kopfteils,
- Fig. 2: eine schematische Darstellung des Kindersitzes mit teilweise ausgeblendeten Bauteilen in einer Maximal-Kleinkindhöhe des Kopfteils,
- Fig. 3: eine schematische Darstellung einer Sitzbodeneinheit der Kindersitzeinheit mit teilweise ausgeblendeten Bauteilen,
- Fig. 4: eine schematische Seitenansicht des Kindersitzes in der Minimalstellung des Kopfteils mit teilweise ausgeblendeten Bauteilen,
- Fig. 5: eine schematische Seitenansicht des Kindersitzes in der Maximal-Kleinkindhöhe des Kopfteils mit teilweise ausgeblendeten Bauteilen,
- Fig. 6: eine schematische Rückansicht des Kindersitzes in der Minimalstellung des Kopfteils mit teilweise ausgeblendeten Bauteilen,
- Fig. 7: eine schematische Frontansicht des Kindersitzes in der Minimalstellung des Kopfteils mit teilweise ausgeblendeten Bauteilen,
- Fig. 8: eine schematische Detailansicht des Kindersitzes mit einem Teil einer Verriegelungsvorrichtung und einer Verstauvorrichtung,
- Fig. 9: eine schematische Schnittansicht durch einen Teilmechanismus eines Ver- und Entriegelmechanismus der Verriegelungsvorrichtung,
- Fig. 10: eine schematische Darstellung eines Grundkörpers des Kopfteils und
- Fig. 11: eine schematische Darstellung eines Kindersitzes.

### Beschreibung des Ausführungsbeispiels

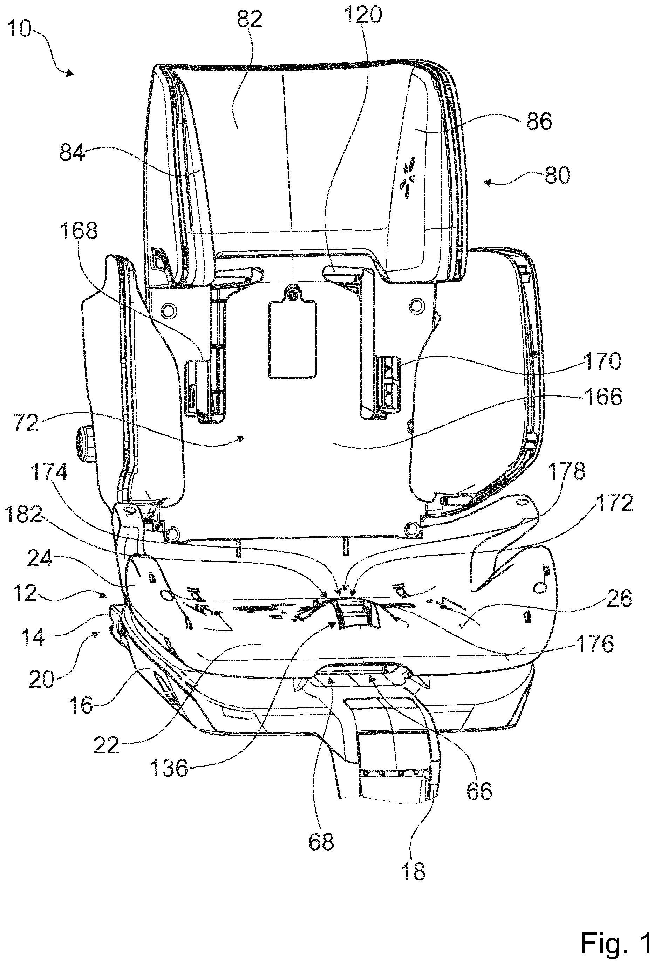

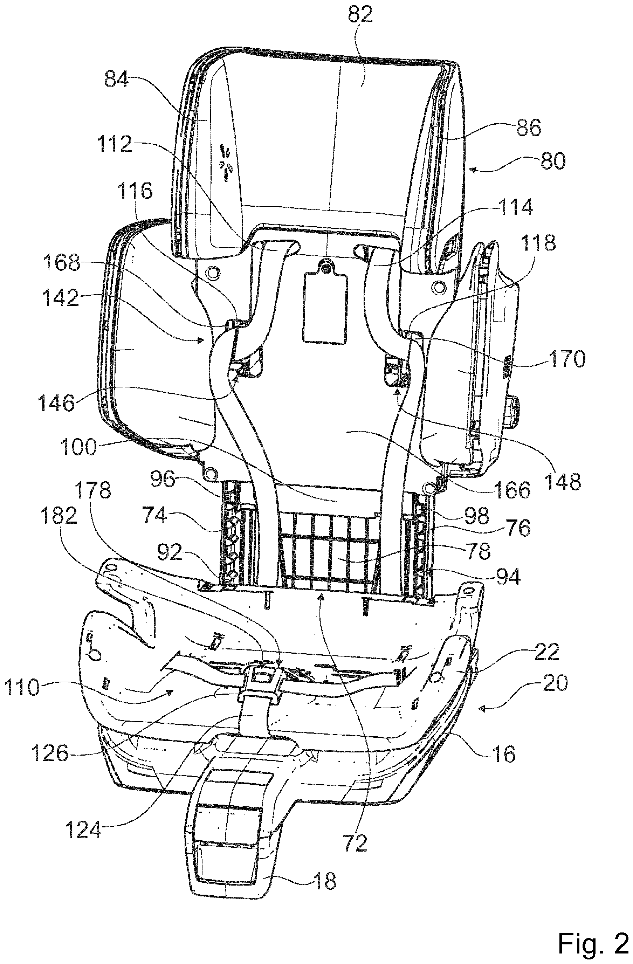

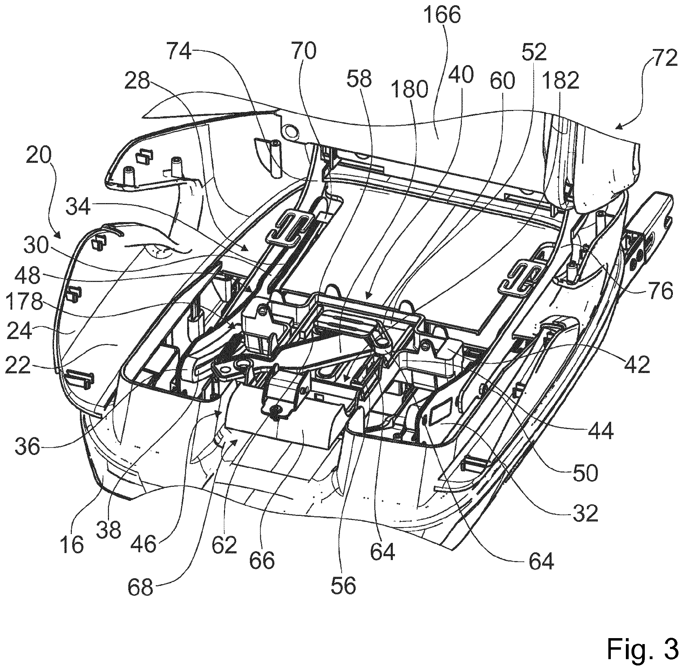

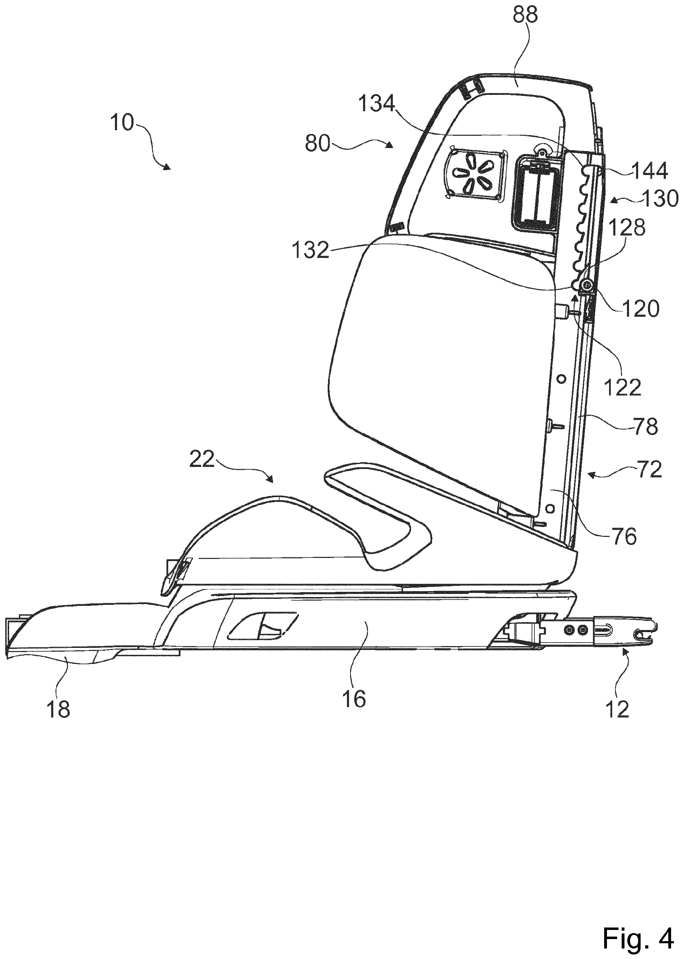

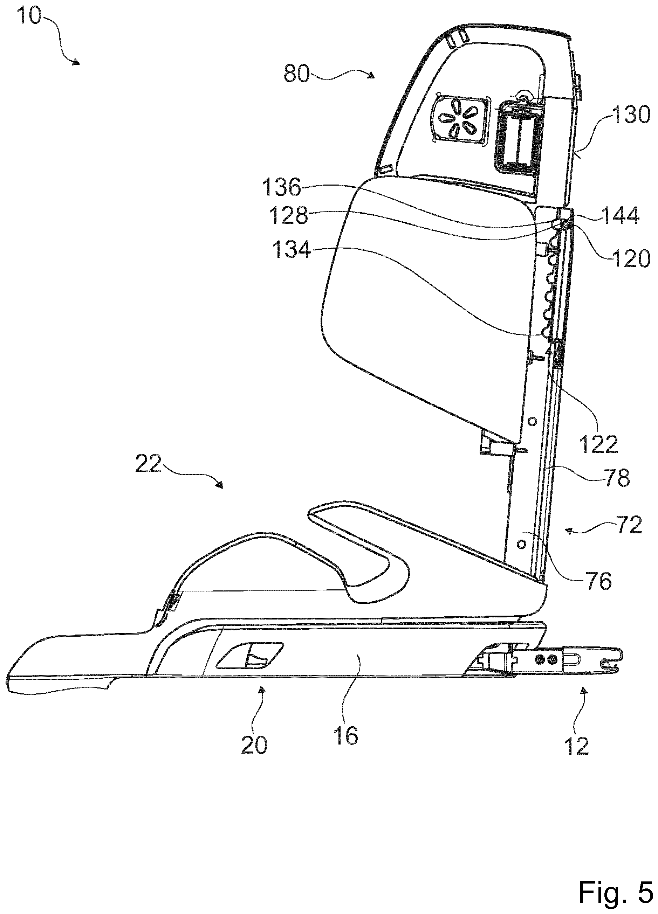

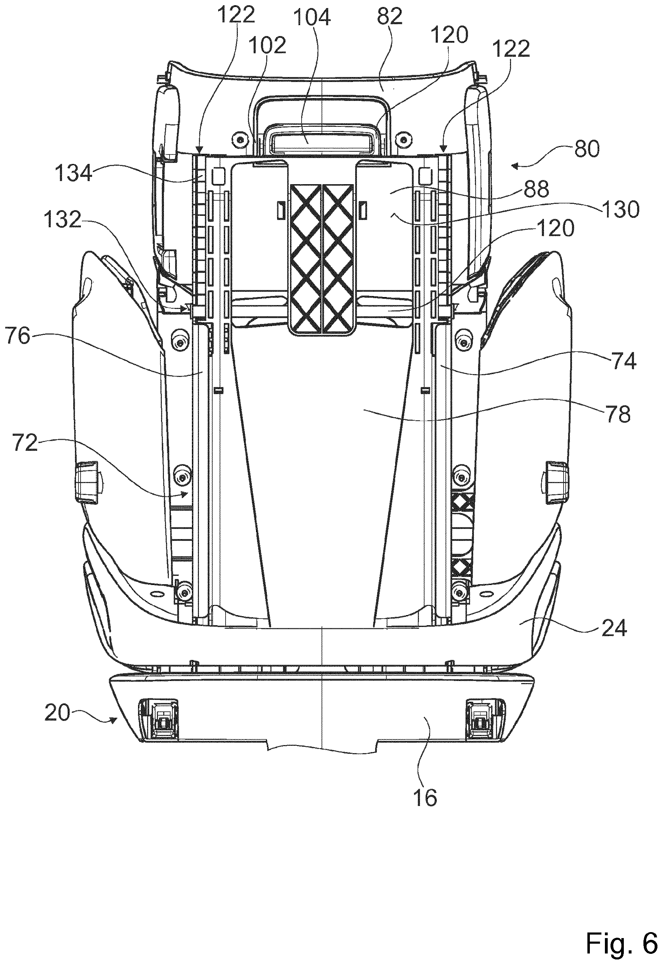

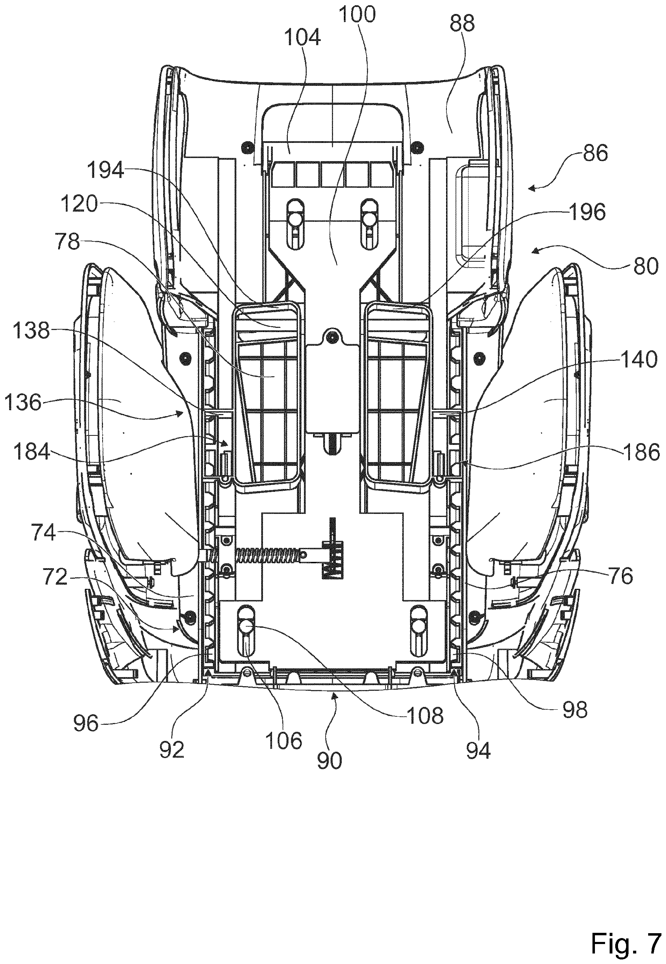

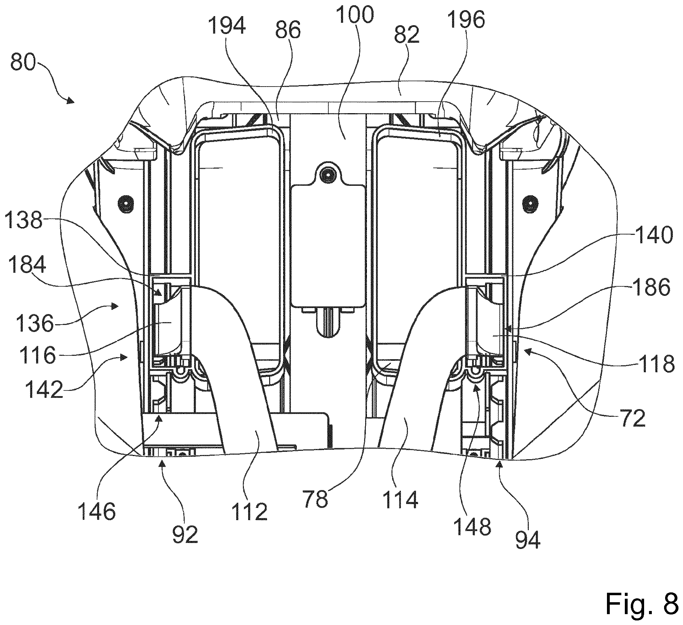

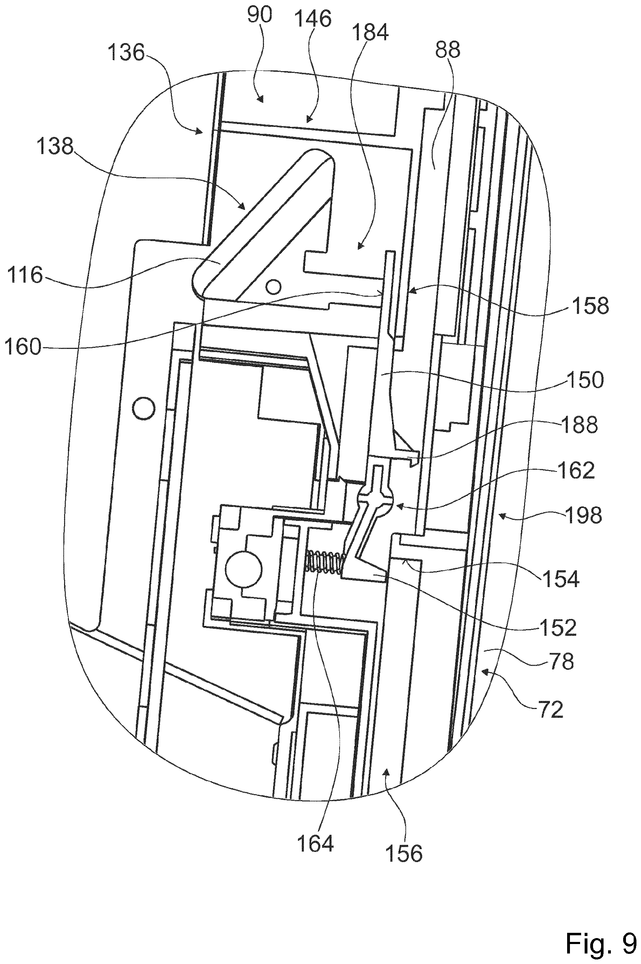

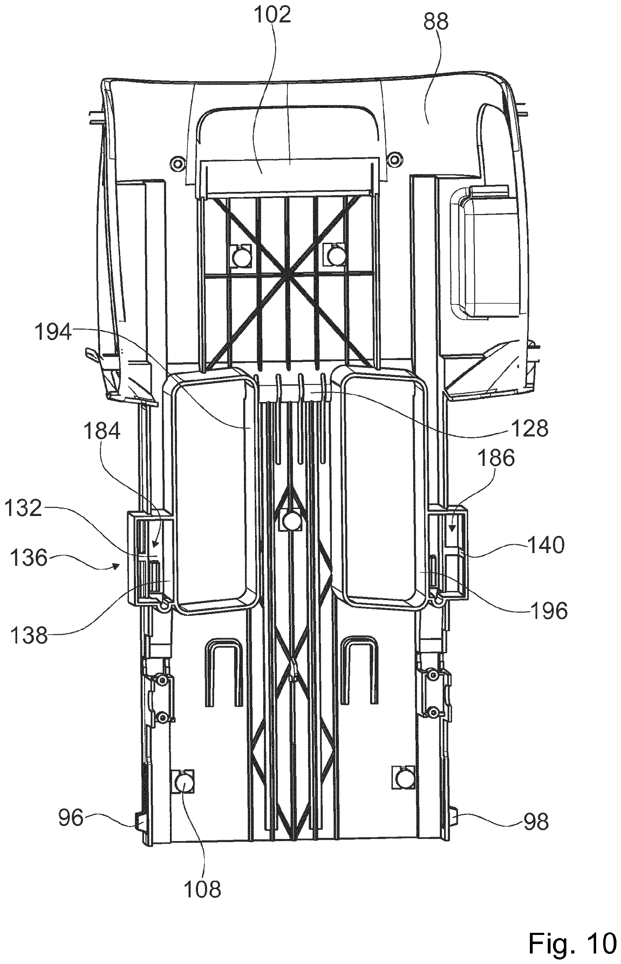

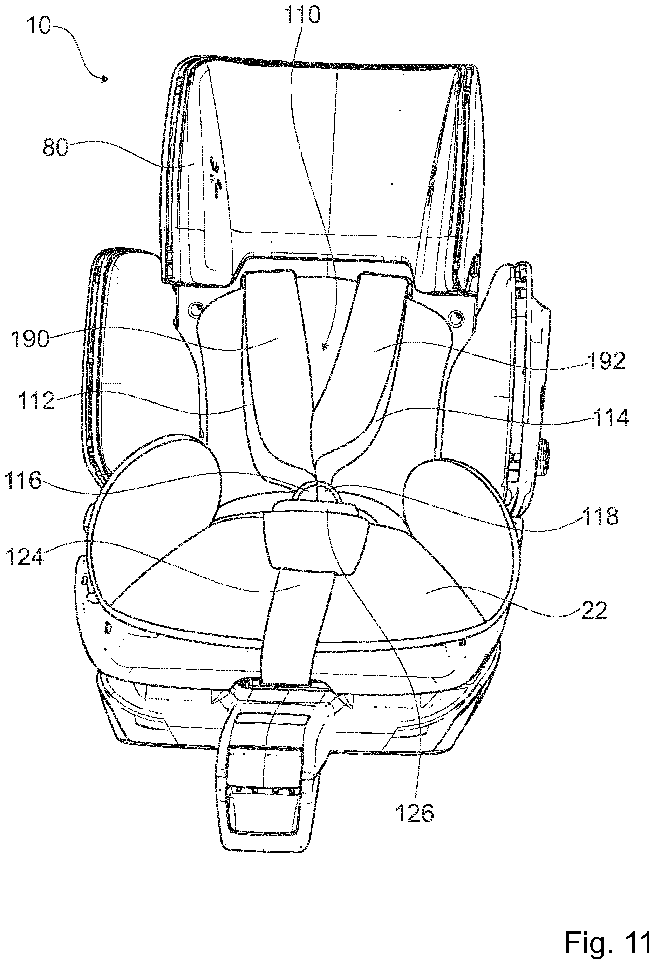

Die Figuren 1 bis 11 zeigen eine erfindungsgemäße Kindersitzvorrichtung. Die Kindersitzvorrichtung ist als Teil eines Kindersitzes 10 ausgebildet. Der Kindersitz 10 ist dabei als ein Kraftfahrzeugkindersitz ausgebildet, der dazu vorgesehen ist, in einem Kraftfahrzeug, insbesondere auf einem Kraftfahrzeugsitz oder einer Kraftfahrzeugsitzbank, angebracht zu werden. Der Kindersitz 10 ist dazu vorgesehen, fest in dem Kraftfahrzeug montiert zu werden, sodass eine Sicherheit für ein in dem Kindersitz 10 sitzendes Kind gewährleistet werden kann. Der Kindersitz 10 ist dazu vorgesehen, starr mit dem Kraftfahrzeug, insbesondere mit einem Kraftfahrzeugsitz oder einer Kraftfahrzeugsitzbank des Fahrzeugs, gekoppelt zu werden. Dazu weist der Kindersitz 10 ein Isofix-Modul 12 auf. Das Isofix-Modul 12 weist zwei als Formschlusselemente ausgebildete Isofix-Konnektoren 14 auf, die zur Montage des Kindersitzes 10 in dem Kraftfahrzeug dazu vorgesehen sind, formschlüssig mit korrespondierenden Isofix-Konnektoren verbunden zu werden, die fest und vorzugsweise starr in dem Kraftfahrzeug angeordnet sind. Grundsätzlich ist es auch denkbar, dass der Kindersitz 10 mittels anders ausgebildeten Verbindungselementen fest und starr mit dem Kraftfahrzeug gekoppelt ist.

Der Kindersitz 10 weist eine Sitzbodeneinheit 20 auf. Die Sitzbodeneinheit 20 umfasst einen Grundkörper 16. Der Grundkörper 16 ist fest mit dem Isofix-Modul 12 gekoppelt. Dabei ist der Grundkörper 16 starr mit dem Isofix-Modul 12 verbunden. Der Grundkörper 16 der Sitzbodeneinheit 20 ist als eine Halbschale ausgebildet. Mit einer Unterseite bildet der Grundkörper 16 der Sitzbodeneinheit 20 eine Auflagefläche aus. Mit der Auflagefläche stellt der Grundkörper 16 der Sitzbodeneinheit 20 eine Abstützfläche bereit. In einem in dem Kraftfahrzeug montierten Zustand liegt der Kindersitz 10 mit der Abstützfläche, die der Grundkörper 16 der Sitzbodeneinheit 20 ausbildet, auf dem Kraftfahrzeugsitz oder der Kraftfahrzeugsitzbank, auf dem bzw. der dieser montiert ist, auf. Über die Abstützfläche des Grundkörpers 16 werden Abstützkräfte von dem Kindersitz 10 in den Kraftfahrzeugsitz oder die Kraftfahrzeugsitzbank eingeleitet.

Der Kindersitz 10 weist weiter einen Abstützfuß 18 auf, der klappbar an einem vorderen Ende des Grundkörpers 16 der Sitzbodeneinheit 20 verstellbar angebunden ist. Der Abstützfuß 18 kann zwischen einer Verstauposition und einer Gebrauchsposition verstellt werden. In der Gebrauchsposition ist der Abstützfuß 18 dazu vorgesehen, sich auf einem vor dem Kraftfahrzeugsitz oder der Kraftfahrzeugsitzbank, auf dem der Kindersitz 10 angeordnet ist, befindlichen Kraftfahrzeugboden abzustützen, um so einen sicheren Stand des Kindersitzes 10 in dem Kraftfahrzeug zu gewährleisten. Zur Verstellung des Abstützfußes 18 weist der Kindersitz 10 eine nicht näher dargestellte Verstelleinheit auf, über die der Abstützfuß 18 in der Verstauposition und der Gebrauchsposition arretierbar ist und über die ein Bediener den Abstützfuß 18 zur Verstellung zwischen der Verstauposition und der Gebrauchsposition entsperren kann.

Die Sitzbodeneinheit 20 umfasst einen Sitzboden 22. Der Sitzboden 22 bildet eine Sitz- und/oder Liegefläche für ein Kind aus. Der Sitzboden 22 ist mit dem Grundkörper 16 der Sitzbodeneinheit 20 gekoppelt. Der Sitzboden 22 ist mehrteilig ausgebildet. Grundsätzlich ist es auch denkbar, dass der Sitzboden 22 einteilig ausgebildet ist. Der Sitzboden 22 weist eine Außenschale 24 aus. Die Außenschale 24 ist im Wesentlichen U-förmig ausgebildet. Dabei weist die Außenschale 24 eine Rückseite auf, mit der die Außenschale 24 den Sitzboden 22 nach hinten abschließt. Die Außenschale 24 bildet zwei Seitenbereiche aus, die den Sitzboden 22 jeweils auf eine Seite hin begrenzen. Die Seitenbereiche der Außenschale 24 bilden dabei jeweils eine Kontur einer Armlehne aus. Die Außenschale 24 bildet mittig eine Ausnehmung aus, die sich über einen Großteil des Grundkörpers 16 der Sitzbodeneinheit 20 erstreckt. Die Außenschale 24 erstreckt sich lediglich über Randbereiche des Grundkörpers 16. In einem vorderen Bereich ist die Außenschale 24 geöffnet. Der Sitzboden 22 weist eine Oberschale 26 auf. Die Oberschale 26 ist fest mit der Außenschale 24 verbunden. Die Oberschale 26 ist in einem Bereich angeordnet, den die Außenschale 24 einschließt. Dabei ist die Oberschale 26 an den Seiten jeweils mit den Seitenbereichen der Außenschale 24 fest verbunden. In Außenbereichen erstreckt sich die Oberschale 26 bis an die Rückseite der Außenschale 24. Die Oberschale 26 überdeckt einen Bereich zwischen den Seitenbereichen der Außenschale 24, in dem die Außenschale 24 die Ausnehmung aufweist. Die Außenschale 24 und die Oberschale 26 bilden zusammen einen Grundkörper 16 des Sitzbodens 22 aus.

Der Sitzboden 22 ist verstellbar mit dem Grundkörper 16 der Sitzbodeneinheit 20 gekoppelt. Die Kindersitzvorrichtung umfasst eine Verstelleinheit 28, mittels der ein Teil der Sitzbodeneinheit 20, insbesondere der Sitzboden 22, zwischen verschiedenen Stellungen verstellbar ist. Der Sitzboden 22 ist über die Verstelleinheit 28 zu dem Grundkörper 16 der Sitzbodeneinheit 20 verstellbar. Der Sitzboden 22 ist mittels der Verstelleinheit 28 in einer Sitzstellung, einer Komfortstellung und einer Schlafstellung verstellbar. Dabei ist der Sitzboden 22 in den verschiedenen Stellungen mittels der Verstelleinheit 28 arretierbar. In der Sitzstellung ist der Sitzboden 22 im Wesentlichen parallel zu dem Grundkörper 16 der Sitzbodeneinheit 20 ausgerichtet. Die Sitzstellung bildet eine 0-Grad-Stellung aus. In der Komfortstellung ist der Sitzboden 22 um 4 Grad aus der Sitzstellung ausgelenkt. In der Schlafstellung ist der Sitzboden 22 um 12 Grad aus der Sitzstellung ausgelenkt. Dabei wird beim Verschwenken aus der Sitzstellung heraus in die Komfortstellung oder die Schlafstellung ein vorderes Ende des Sitzbodens 22 angehoben.

Die Verstelleinheit 28 weist zwei Führungselemente 30, 32 auf, die starr mit dem Grundkörper 16 der Sitzbodeneinheit 20 verbunden sind. Die Führungselemente 30, 32 sind als Wandungen ausgebildet, die sich von dem Grundkörper 16 aus in Richtung des Sitzbodens 22 erstrecken. Die Führungselemente 30, 32 erstrecken sich dabei parallel zu der Sitzrichtung des Kindersitzes 10. Die Führungselemente 30, 32 sind dabei beabstandet zueinander angeordnet. Das erste Führungselement 30 ist dabei einer ersten Außenseite des Grundkörpers 16 zugewandt und das zweite Führungselement 32 einer zweiten, der ersten Außenseite gegenüberliegenden Außenseite des Grundkörpers 16. Die Führungselemente 30, 32 sind gleich ausgebildet. Die Führungselemente 30, 32 weisen jeweils eine Führungsnut 34 auf. Die Führungsnuten 34 sind an einem hinteren Ende der Führungselemente 30, 32 angeordnet. Die Führungsnuten 34 weisen einen kreisbogenförmigen Verlauf auf. Die Führungsnuten 34 sind dabei als Durchgangsnuten ausgeführt, die das jeweilige Führungselement 30, 32 komplett durchdringen. Die Verstelleinheit 28 weist einen Verstellbozen 70 auf. Der Verstellbolzen 70 ist durch die Führungsnuten 34 beider Führungselemente 30, 32 geführt. Der Verstellbolzen 70 durchdringt die Führungsnuten 34 beider Führungselemente 30, 32. Dabei ist der Verstellbolzen 70 an seinen äußeren Enden jeweils mit der Oberschale 26 des Sitzbodens 22 verbunden. Dadurch ist der Sitzboden 22 mit seinem hinteren Bereich über den Verstellbolzen 70 zu den Führungselementen 30, 32 und damit dem Grundkörper 16 der Sitzbodeneinheit 20 gelagert. An einem vorderen Ende weisen die Führungselemente 30, 32 jeweils zwei Führungsschienen 36 auf. Die Führungsschienen 36 sind jeweils an einer dem anderen Führungselement 30, 32 zugewandten Innenseite des entsprechenden Führungselements 30, 32 angebracht. Die Führungsschienen 36 weisen jeweils eine Führungsnut 38 auf, die jeweils nach innen gerichtet ist. In die Führungsnuten 38 der Führungsschienen 36 sind jeweils drei nicht näher dargestellte Rastlöcher eingebracht, die zur Verriegelung des Sitzbodens 22 in den drei Stellungen vorgesehen sind. Die Rastlöcher sind dabei als Durchgangslöcher ausgebildet. Grundsätzlich ist es auch denkbar, dass die Rastlöcher als Sacklöcher ausgebildet sind, die jeweils eine Tiefe aufweisen, die größer ist als eine Tiefe der entsprechenden Führungsnut 38. Dabei sind erste Rastlöcher, welche jeweils an einem hinteren Ende der entsprechenden Führungsnut 38 angeordnet sind, zur Verriegelung des Sitzbodens 22 in der Sitzstellung vorgesehen. Die zweiten Rastlöcher sind beabstandet zu den ersten Rastlöchern angeordnet und zur Verriegelung des Sitzbodens 22 in der Komfortstellung vorgesehen. Die dritten Rastlöcher sind jeweils an einem vorderen Ende der entsprechenden Führungsnut 38 angeordnet und sind zur Verriegelung des Sitzbodens 22 in der Schlafstellung vorgesehen.

Die Verstelleinheit 28 weist ein sitzbodenseitiges Verriegelmodul 40 auf. Das Verriegelmodul 40 ist mit dem Sitzboden 22 gekoppelt. Das Verriegelmodul 40 umfasst einen Schlitten 42, der verschiebbar in dem Grundkörper 16 der Sitzbodeneinheit 20 gelagert ist. Der Schlitten 42 ist mittig in dem Grundkörper 16 der Sitzbodeneinheit 20 angeordnet. Dabei weist der Schlitten 42 eine in etwa T-förmige Grundform auf. Dabei weist der Schlitten 42 eine Grundplatte und eine die Grundplatte im Wesentlichen umschließende Wandung 44 auf. Dabei ist der Schlitten 42 an einem vorderen Ende geöffnet. An dem vorderen Ende des Schlittens 42 weist die Wandung 44 eine Öffnung auf. Die Wandung 44 des Schlittens 42 schließt einen Innenraum des Schlittens 42 ein. In dem Innenraum des Schlittens 42 ist eine Betätigungsmechanik 46 der Verstelleinheit 28 angeordnet. Die Betätigungsmechanik 46 umfasst zwei federbelastete Arretierbolzen 48, 50. Jeder der Arretierbolzen 48, 50 ist jeweils dazu vorgesehen, in einer der Führungsnuten 38 der Führungsschienen 36 geführt zu werden und in den entsprechenden Stellungen des Sitzbodens 22 in die entsprechenden Rastlöcher einzurasten. Die Arretierbolzen 48, 50 sind in dem breiten Bereich des Schlittens 42 angeordnet und ragen seitlich aus dem Schlitten 42 hinaus. Dazu weist die Wandung 44 an den Seiten jeweils ein Durchgangsloch auf, durch das sich jeweils der entsprechende Arretierbolzen 48, 50 erstreckt. Die Arretierbolzen 48, 50 sind dabei in Querrichtung, also entlang ihrer Haupterstreckungsrichtung, verschiebbar gelagert. Dazu bildet der Schlitten 42 in dem breiten Bereich eine Vertiefung aus, in der die Arretierbolzen 48, 50 verschiebbar gelagert sind. Dabei sind die Arretierbolzen 48, 50 mittels einer Vorspannkraft nach außen gedrückt. Zur Erzeugung der Vorspannkraft weist die Betätigungsmechanik 46 ein nicht näher dargestelltes Federelement auf. Das Federelement drückt die koaxial zueinander angeordneten Arretierbolzen 48, 50 auseinander. Sind die Arretierbolzen 48, 50 mittels des Federelements auseinandergerückt, so greifen diese, insofern sie koaxial zu einem Paar von Rastlöchern der Führungsnuten 38 der Führungsschienen 36 angeordnet sind, in das jeweilige Rastloch ein und verriegeln den Sitzboden 22 so in der entsprechenden Stellung. Die Betätigungsmechanik 46 umfasst eine Betätigungsplatte 52. Die Betätigungsplatte 52 ist verschiebbar in dem Schlitten 42 gelagert. Dabei ist die Betätigungsplatte 52 in Sitzrichtung verschiebbar in dem Schlitten 42 gelagert. Eine Verschiebeachse der Betätigungsplatte 52 ist orthogonal zu einer Verschiebeachse ausgerichtet, zu der die Arretierbolzen 48, 50 gelagert sind. In einem mittleren Bereich weist die Betätigungsplatte 52 mehrere, als Nuten ausgebildete Führungselemente 54 auf, in die jeweils von dem Schlitten 42 ausgebildete Führungselemente 56 eingreifen. Die Führungselemente 54, 56 sind dabei parallel zu der Verschiebeachse der Betätigungsplatte 52 ausgerichtet. In einem hinteren Bereich weist die Betätigungsplatte 52 zwei schräg verlaufende Nuten 58, 60 auf. Die Nuten 58, 60 sind als Durchgangsnuten ausgebildet und laufen zu einem hinteren Ende der Betätigungsplatte 52 hin aufeinander zu. Die Arretierbolzen 48, 50 weisen jeweils ein Formschlusselement 62, 64 auf, wobei jeweils ein Formschlusselement 62, 64 in die ihm zugeordnete Nut 58, 60 eingreift. Durch Verschiebung der Betätigungsplatte 52 entlang ihrer Verschiebeachse können die Arretierbolzen 48, 50, über die Kopplung mit der Betätigungsplatte 52 über die entsprechende Nut 58, 60 und das entsprechende Formschlusselement 62, 64 entlang ihrer Verschiebeachse verschoben werden. Die Betätigungsplatte 52 weist eine Verriegelstellung und eine Entriegelstellung auf. In der Verriegelstellung ist die Betätigungsplatte 52 möglichst weit hinten in dem Schlitten 42 angeordnet. Die Verriegelstellung stellt dabei eine Ruhestellung der Betätigungsplatte 52 dar. Die Ruhestellung, also die Verriegelstellung, ist die Stellung, die die Betätigungsplatte 52 einnimmt, wenn keine Betätigungskraft von außen, insbesondere von einem Benutzer, auf die Betätigungsplatte 52 einwirkt. In der Verriegelstellung sind die Formschlusselemente 62, 64 der Arretierbolzen 48, 50 an einem vorderen Ende der Nuten 58, 60 der Betätigungsplatte 52 angeordnet, wodurch die Arretierbolzen 48, 50 durch das Federelement der Betätigungsmechanik 46 nach außen gedrückt werden und in die entsprechenden Rastlöcher der Führungsnuten 38 der Führungsschienen 36 eingreifen. In der Entriegelstellung ist die Betätigungsplatte 52 in Sitzrichtung aus der Verriegelstellung ausgelenkt. Dabei ist die Betätigungsplatte 52 so weit nach vorne verschoben, dass die Formschlusselemente 62, 64 der Arretierbolzen 48, 50 an einem hinteren Ende der Nuten 58, 60 anschlagen. Durch den schrägen Verlauf der Nuten 58, 60 sind die Arretierbolzen 48, 50 über die Kopplung mit den Nuten 58, 60 entgegen der Vorspannkraft des Federelements der Betätigungsmechanik 46 nach innen ausgelenkt. Dadurch sind die Arretierbolzen 48, 50 aus den Rastlöchern der Führungsnuten 38 der Führungsschienen 36 herausbewegt und der Schlitten 42 kann über die Führungsnuten 38 der Führungsschienen 36 verstellt werden. Zur Betätigung der Betätigungsmechanik 46 und damit der Verstelleinheit 28 durch einen Benutzer weist die Betätigungsmechanik 46 ein Griffelement 66 auf. Das Griffelement 66 ist als ein Betätigungselement ausgebildet, das dazu vorgesehen ist, von einem Benutzer ergriffen zu werden. Das Griffelement 66 ist an einem vorderen Ende der Betätigungsplatte 52 angeordnet und mit der Betätigungsplatte 52 fest verbunden. Dabei ragt das Griffelement 66 aus einer Öffnung 68 des Grundkörpers 16 der Sitzbodeneinheit 20 hinaus.

Die Oberschale 26 des Sitzbodens 22 ist mit dem Schlitten 42 des Verriegelmoduls 40 verbunden. Zusätzlich ist die Oberschale 26 des Sitzbodens 22 über den Verstellbolzen 70 mit der Verstelleinheit 28 und damit dem Grundkörper 16 verbunden. Dadurch ist der Sitzboden 22 mit der Verstelleinheit 28 gekoppelt und kann über diese in die verschiedenen Stellungen verstellt werden. Zur Verstellung des Sitzbodens 22 zwischen der Sitzstellung, der Komfortstellung und der Schlafstellung wird die Betätigungsmechanik 46 und damit die Verstelleinheit 28 von einem Benutzer über das Griffelement 66 betätigt. Dabei zieht der Benutzer an dem Griffelement 66, sodass die Betätigungsplatte 52 in Sitzrichtung ausgelenkt wird und über die Kopplung mit den Nuten 58, 60 die Arretierbolzen 48, 50 aus den Rastlöchern der Führungsnuten 38 der Führungsschienen 36 herausbewegt und den Sitzboden 22 so freigibt. Der Sitzboden 22 kann nun in die gewünschte Stellung verstellt werden, wobei die Arretierbolzen 48, 50 durch die Vorspannkraft des Federelements der Betätigungsmechanik 46 in der entsprechenden Stellung in die entsprechenden Rastlöcher der Führungsnuten 38 der Führungsschienen 36 einrasten. Durch das Bewegen der Arretierbolzen 48, 50 nach außen wird die Betätigungsplatte 52 über die Kopplung der Arretierbolzen 48, 50 über die Formschlusselemente 62, 64 und die Nuten 58, 60 wieder in ihre Ruhestellung am hinteren Ende des Schlittens 42 bewegt, sobald eine Betätigungskraft des Benutzers, die er zur Verstellung auf das Griffelement 66 ausgeübt hat, wegfällt.

Die Kindersitzvorrichtung umfasst eine Rückenlehneneinheit 72. Die Rückenlehneneinheit 72 ist mit dem Sitzboden 22 gekoppelt. Dabei ist die Rückenlehneneinheit 72 zusammen mit dem Sitzboden 22 über die Verstelleinheit 28 in die verschiedenen Stellungen verstellbar. Die Rückenlehneneinheit 72 ist teilweise einstückig mit dem Sitzboden 22 ausgebildet. Die Rückenlehneneinheit 72 weist zwei L-förmig ausgebildete Befestigungsträger 74, 76 auf. Die Befestigungsträger 74, 76 sind jeweils auf einer Außenseite der Führungselemente 30, 32 des Grundkörpers 16 angeordnet. Dabei erstrecken sich die Befestigungsträger 74, 76 in ihrem unteren Bereich von einem vorderen Bereich des Sitzbodens 22, in dem die Betätigungsmechanik 46 angeordnet ist, bis in einen hinteren Bereich des Sitzbodens 22. Dabei sind die Befestigungsträger 74, 76 in dem hinteren Bereich über den Verstellbolzen 70 und in dem vorderen Bereich über die Arretierbolzen 48, 50 mit der Verstelleinheit 28 und damit dem Sitzboden 22 gekoppelt. Zur Kopplung mit dem Verstellbolzen 70 und den Arretierbolzen 48, 50 weisen die Befestigungsträger 74, 76 an den entsprechenden Stellen Durchgangslöcher auf, in die der Verstellbolzen 70 bzw. die Arretierbolzen 48, 50 zur Verbindung formschlüssig angeordnet sind. An einem hinteren Ende des Sitzbodens 22 bilden die Befestigungsträger 74, 76 einen in etwa 90-Grad-Knick aus und erstrecken sich nach oben von dem Sitzboden 22 weg. Die Rückenlehneneinheit 72 weist eine Rückplatte 78 auf. Die Rückplatte 78 ist in einem Bereich, in dem sich die Befestigungsträger 74, 76 nach oben von dem Sitzboden 22 weg erstrecken, zwischen den Befestigungsträgern 74, 76 angeordnet. Die Rückplatte 78 ist fest mit den Befestigungsträgern 74, 76 verbunden. Die Rückplatte 78 und die Befestigungsträger 74, 76 bilden zusammen die zu der Sitzbodeneinheit 20 fest verbundene Rückenlehneneinheit 72 aus. Die Rückenlehneneinheit 72 ist in einer Höhe nicht zu dem Sitzboden 22 verstellbar.

Die Kindersitzvorrichtung weist ein Kopfteil 80 auf. Das Kopfteil 80 bildet einen für einen Kopf des Kindes vorgesehenen Auflagebereich aus. Zur Ausbildung des Auflagebereichs weist das Kopfteil 80 eine Kopfstütze 82 mit seitlichen Kopfstützelementen 84, 86 auf. Die Kopfstützelemente 84, 86 erstrecken sich von einer Rückwand der Kopfstütze 82 aus in Sitzrichtung nach vorne. Die Kopfstützelemente 84, 86 sind beabstandet zueinander angeordnet. Dabei weisen die beiden Kopfstützelemente 84, 86 einen festen Abstand zueinander auf. Grundsätzlich wäre es auch denkbar, dass die Kopfstützelemente 84, 86 einen Verstellmechanismus aufweisen, mittels dessen ein Abstand der zwei Kopfstützelemente 84, 86 zueinander eingestellt werden kann. Das Kopfteil 80 weist einen Grundkörper 88 auf. Der Grundkörper 88 bildet dabei eine Tragstruktur der Kopfstütze 82 und der Kopfstützelemente 84, 86 aus. Der Grundkörper 88 ist als ein Spritzgussteil ausgebildet. Der Grundkörper 88 erstreckt sich teilweise bis zwischen die Befestigungsträger 74, 76 und die Rückplatte 78 der Rückenlehneneinheit 72. Der Grundkörper 88 weist eine Rückseite 130 auf, die der Rückplatte 78 der Rückenlehneneinheit 72 zugewandt ist. Dabei ist der Grundkörper 88 des Kopfteils 80 in einer Höhe verstellbar zwischen den Befestigungsträgern 74, 76 und der Rückplatte 78 angeordnet. Das Kopfteil 80 ist als gesamtes in einer Höhe zu dem Sitzboden 22 verstellbar. Das Kopfteil 80 kann in verschiedenen Höhen zu der Sitzbodeneinheit 20 angeordnet werden. Dabei ist das Kopfteil 80 verschiebbar zu der Rückenlehneneinheit 72 angeordnet. Zur verschiebbaren Lagerung des Kopfteils 80 zu dem Sitzboden 22 und der Rückenlehneneinheit 72 weist die Kindersitzvorrichtung eine nicht näher dargestellte Linearlagereinheit auf. Dabei ist die Linearlagereinheit, mittels der das Kopfteil 80 zu der Rückenlehneneinheit 72 verschiebbar ist, im Wesentlichen äquivalent zu aus dem Stand der Technik bekannten Linearlagereinheiten ausgebildet. Die Linearlagereinheit weist von dem Grundkörper 88 ausgebildete Lagerelemente und von der Rückenlehneneinheit 72 ausgebildete Lagerelemente auf. Der Grundkörper 88 ist zur verschiebbaren Lagerung des Kopfteils 80 in der Rückenlehneneinheit 72 gelagert. Die Lagerelemente der Rückenlehneneinheit 72 sind dabei korrespondierend zu den Lagerelementen des Kopfteils 80 ausgebildet.

Die Kindersitzvorrichtung umfasst eine Verriegelungsvorrichtung 90, die dazu vorgesehen ist, das Kopfteil 80 in verschiedenen Stellungen zu der Sitzbodeneinheit 20 zu verriegeln. Mittels der Verriegelungsvorrichtung 90 ist das Kopfteil 80 in verschiedenen Stellungen zu der Rückenlehneneinheit 72 arretierbar. Zur Arretierung weist die Verriegelungsvorrichtung 90 zwei rückenlehnenseitige Rastschienen 92, 94 auf. Die Rastschienen 92, 94 sind jeweils an einer Innenseite der Befestigungsträger 74, 76 angebracht und weisen mehrere Rastzähne auf. Die Rastzähne der Rastschienen 92, 94 erheben sich dabei in Richtung einer Mitte der Rückenlehneneinheit 72. Die Rastzähne der Rastschienen 92, 94 sind dabei beabstandet zueinander angeordnet. Korrespondierend zu den Rastschienen 92, 94 weist die Verriegelungsvorrichtung 90 kopfteilseitige Rastelemente 96, 98 auf. Die Rastelemente 96, 98 sind von dem Kopfteil 80 gebildet. Die kopfteilseitigen Rastelemente 96, 98 sind von dem Grundkörper 88 des Kopfteils 80 gebildet. Dabei sind die Rastelemente 96, 98 als federnde Rastzähne ausgebildet, wobei je eines der beiden Rastelemente 96, 98 einer der Rastschienen 92, 94 zugeordnet ist. Die als federnde Rastzähne ausgebildeten Rastelemente 96, 98, die von dem Grundkörper 88 des Kopfteils 80 ausgebildet sind, sind dazu vorgesehen, quer zu der Verschiebeachse, zu der das Kopfteil 80 verschiebbar ist, ausgelenkt zu werden. Durch eine Betätigungskraft, die von einem Bediener auf den Grundkörper 88 zum Verstellen des Kopfteils 80 ausgeübt wird, werden die als federnde Rastzähne ausgebildeten Rastelemente 96, 98, die von dem Grundkörper 88 ausgebildet sind, durch ihre Kontur und die Kontur der Rastzähne der Rastschienen 92, 94 nach innen elastisch ausgelenkt und geben so einen Verfahrweg für das Kopfteil 80 frei. Dabei rasten die als federnde Rastzähne ausgebildeten Rastelemente 96, 98 jeweils hinter dem jeweilig nächsten Rastzahn der entsprechenden Rastschiene 92, 94 ein und verriegeln das Kopfteil 80 in der entsprechenden Höhe.

Die Verriegelungsvorrichtung 90 umfasst einen Betätigungsarm 100. Der Betätigungsarm 100 ist dazu vorgesehen, dass ein Bediener die Verriegelungsvorrichtung 90 betätigen und so das Kopfteil 80 in seiner Höhe zu der Rückenlehneneinheit 72 bzw. der Sitzbodeneinheit 20 verstellen kann. Der Betätigungsarm 100 erstreckt sich von einem oberen Bereich des Grundkörpers 88 bis in einen unteren Bereich des Grundkörpers 88, in dem der Grundkörper 88 die Rastelemente 96, 98 ausbildet. Dabei ist der Betätigungsarm 100 auf einer nach innen gerichteten Innenseite des Grundkörpers 88 angeordnet. In einem oberen Bereich weist der Grundkörper 88 eine Ausnehmung 102 auf, durch die der Betätigungsarm 100 mit einem oberen Ende nach außen auf eine Außenseite des Grundkörpers 88 geführt wird. An dem oberen Ende bildet der Betätigungsarm 100 ein Griffelement 104 aus. Das Griffelement 104 ist dazu vorgesehen, von einem Bediener zur Verstellung des Kopfteils 80 erfasst zu werden. Über das Griffelement 104 kann ein Bediener eine Betätigungskraft in den Betätigungsarm 100 einleiten. Der Betätigungsarm 100 ist mit dem Grundkörper 88 des Kopfteils 80 gekoppelt. Der Betätigungsarm 100 ist über zwei Stift-Nut-Verbindungen mit dem Grundkörper 88 verbunden. Der Betätigungsarm 100 bildet zwei Nuten 106 aus, von denen hier aus Gründen der Übersichtlichkeit nur eine bezeichnet ist. Die Nuten 106 sind als Durchgangsnuten ausgebildet. Die Nuten 106 verlaufen parallel zu einer Verschiebeachse des Kopfteils 80 und einer Betätigungsrichtung des Betätigungsarms 100. Der Grundkörper 88 weist zwei Stiftelemente 108 auf, die jeweils korrespondierend zu einer Nut 106 ausgebildet sind und in diese eingreifen. In einem unausgelenkten Zustand des Betätigungsarms 100 sind die Stiftelemente 108 in einem oberen Bereich der Nuten 106 angeordnet. Wird der Betätigungsarm 100 über das Griffelement 104 nach oben gezogen, um eine Höhe des Kopfteils 80 zu der Sitzbodeneinheit 20 zu erhöhen, verfahren zunächst die Nuten 106 des Betätigungsarms 100 über die Stiftelemente 108 des Grundkörpers 88, bis diese an einem unteren Ende der jeweiligen Nut 106 anschlagen. Dadurch kann das Griffelement 104 vorteilhaft von dem Kopfteil 80 entfernt werden, sodass ein Bediener das Griffelement 104 vorteilhaft zum Aufbringen einer Betätigungskraft zur Verstellung des Kopfteils 80 greifen kann. Sind die Stiftelemente 108 an dem unteren Ende der Nuten 106 angeschlagen, kann von dem Betätigungsarm 100 eine Betätigungskraft nach oben, die von der Sitzbodeneinheit 20 weggerichtet ist, auf den Grundkörper 88 des Kopfteils 80 übertragen werden und das Kopfteil 80 so nach oben verschoben werden.

Die Kindersitzvorrichtung weist ein integriertes Gurtsystem 110 auf. Das integrierte Gurtsystem 110 ist als ein 5-Punkt-Gurtsystem ausgebildet. Das integrierte Gurtsystem 110 ist dazu vorgesehen, dass Kleinkinder bis zu einem Gewicht von 20 kg und/oder bis zu einer Maximal-Kleinkindhöhe von 105 cm damit in dem Kindersitz 10 gesichert werden. Das integrierte Gurtsystem 110 ist dazu vorgesehen, zwischen einer Minimalhöhe des Kopfteils 80 und der Maximal-Kleinkinderhöhe des Kopfteils 80 zur Sicherung des in dem Kindersitz 10 sitzenden Kindes verwendet zu werden. Das interne Gurtsystem 110 weist zwei rückenlehnenseitige Gurtelemente 112, 114 auf. Die rückenlehnenseitigen Gurtelemente 112, 114 sind dabei aus einem Rückenlehnenbereich, insbesondere einem Bereich der Rückenlehneneinheit 72, aus einer Rückenlehnenfläche herausgeführt. Die rückenlehnenseitigen Gurtelemente 112, 114 weisen an einem vorderen Ende jeweils Formschlusselemente 116, 118 auf. Die Formschlusselemente 116, 118 sind dabei als Gurtzungen ausgebildet. Die rückenlehnenseitigen Gurtelemente 112, 114 sind in einem Bereich zwischen dem Grundkörper 88 des Kopfteils 80 und der Rückplatte 78 der Rückenlehneneinheit 72 nach unten geführt. Die rückenlehnenseitigen Gurtelemente 112, 114 sind unter den Sitzboden 22 geführt, wo sie fest mit der Sitzbodeneinheit 20 verbunden sind. Das integrierte Gurtsystem 110 weist weiter ein sitzbodenseitiges Gurtelement 124 auf. Das sitzbodenseitige Gurtelement 124 weist drei Teilbereiche auf, wobei der erste Teilbereich in einer ersten hinteren Ecke des Sitzbodens 22 unter den Sitzboden 22 geführt ist, der zweite Teilbereich in einer zweiten hinteren Ecke des Sitzbodens 22 unter den Sitzboden 22 geführt ist und der dritte Teilbereich in einem vorderen mittleren Ende des Sitzbodens 22 unter den Sitzboden 22 geführt ist. Die Teilbereiche des sitzbodenseitigen Gurtelements 124 sind unterhalb des Sitzbodens 22 mit der Sitzbodeneinheit 20 und/oder den rückenlehnenseitigen Gurtelementen 112, 114 verbunden. Das sitzbodenseitige Gurtelement 124 weist ein Formschlusselement 126 auf. Das Formschlusselement 126 des sitzbodenseitigen Gurtelements 124 ist als ein Gurtschloss ausgebildet. Die drei Teilbereiche des sitzbodenseitigen Gurtelements 124 sind über das als Gurtschloss ausgebildete Formschlusselement 126 miteinander verbunden. Zur Sicherung eines in dem Kindersitz sitzenden Kindes mittels des integrierten Gurtsystems 110 werden die rückenlehnenseitigen Gurtelemente 112, 114 mit ihren als Gurtzungen ausgebildeten Formschlusselementen 116, 118 formschlüssig mit dem als Gurtschloss ausgebildeten Formschlusselement 126 des sitzbodenseitigen Gurtelements 124 verbunden. Die Gurtelemente 112, 114, 124 des Gurtsystems 110 sind entsprechend den dem Fachmann aus dem Stand der Technik bekannten 5-Punkt-Gurtsystemen ausgebildet.

Zur Erhöhung einer Sicherheit für ein mit dem integrierten Gurtsystem 110 gesichertes Kind weist das Gurtsystem 110 Gurtpolsterelemente 190, 192 auf. Dabei weist das Gurtsystem 110 je rückenlehnenseitigem Gurtelement 112, 114 je ein mit dem Gurtelement 112, 114 gekoppeltes Gurtpolsterelement 190, 192 auf. Die Gurtpolsterelemente 190, 192 sind jeweils mittels integrierter Flausch- und Hakenbänder an dem zugeordneten Gurtelement 112, 114 befestigbar. Grundsätzlich wäre es auch denkbar, dass die Gurtpolsterelemente 190, 192 über andere, dem Fachmann als sinnvoll erscheinende Mittel, wie beispielsweise mittels Druckknöpfen oder einem Reißverschluss, an dem zugeordneten Gurtelement 112, 114 befestigbar sind. Die Gurtpolsterelemente 190, 192 sind dabei vorzugsweise in ein nicht näher beschriebenes oder bezeichnetes Rückenlehnenpolster integriert.

Zur Umlenkung der rückenlehnenseitigen Gurtelemente 112, 114 von einer im Wesentlichen parallel zu der Rückenlehneneinheit 72 verlaufenden Ausrichtung in einem Bereich zwischen dem Grundkörper 88 und der Rückplatte 78 der Rückenlehneneinheit 72 weist das Gurtsystem 110 ein Umlenkelement 120 auf. Das Umlenkelement 120 ist als ein Rundstab ausgebildet. Das als Rundstab ausgebildete Umlenkelement 120 weist eine Länge auf, die größer ist als ein Abstand der beiden Befestigungsträger 74, 76 der Rückenlehneneinheit 72. Das Umlenkelement 120 ist in einer Höhe zu der Rückenlehneneinheit 72 verstellbar. Dadurch können das Gurtsystem 110 und insbesondere die rückenseitigen Gurtelemente 112, 114 bei einer Höhenverstellung des Kopfteils 80 in einer Höhe angepasst werden, um einen optimalen Schutz für Kleinkinder unterschiedlicher Größen bereitzustellen. Zur verschiebbaren Lagerung des Umlenkelements 120 weist das Gurtsystem 110 zwei Führungselemente 122 auf. Die Führungselemente 122, von denen der Übersichtlichkeit halber lediglich eines näher bezeichnet ist, sind jeweils als eine Nut ausgebildet. Die als Nuten ausgebildeten Führungselemente 122 sind von der Rückplatte 78 der Rückenlehneneinheit 72 gebildet. Die als Nuten ausgebildeten Führungselemente 122 sind an einer den Befestigungsträgern 74, 76 zugewandten Seite der Rückplatte 78 angeordnet. Dabei sind die Befestigungsträger 74, 76 in den Bereichen der Führungselemente 122 entsprechend einer Kontur der Führungselemente 122 ausgespart. Die Führungselemente 122 verlaufen dabei in etwa parallel zu der Verschiebeachse, in der das Kopfteil 80 zu der Rückenlehneneinheit 72 verschiebbar ist. Zur Mitnahme des Umlenkelements 120 bei einer Hochbewegung des Kopfteils 80 weist der Grundkörper 88 ein Mitnahmeelement 128 auf. Das Mitnahmeelement 128 ist als ein Formschlusselement ausgebildet. Das Mitnahmeelement 128 ist einstückig mit dem Grundkörper 88 ausgebildet. Das Mitnahmeelement 128 ist dabei als eine Mulde ausgebildet, die auf der Rückseite 130 des Grundkörpers 88 angeordnet ist. Das als Mulde ausgestreckte Mitnahmeelement 128 erstreckt sich dabei in Sitzrichtung nach vorne. Bei einer Hochbewegung des Grundkörpers 88 über den Betätigungsarm 100 wird das Umlenkelement 120 über das Mitnahmeelement 128 in dem Führungselement 122 mitgenommen. Zur Arretierung des Umlenkelements 120 in verschiedenen Höhen weist das Führungselement 122 mehrere Verrastausnehmungen 132, 134 auf. Die Verrastausnehmungen 132, 134 sind auf einer den Befestigungsträgern 74, 76 zugewandten Seite der Führungselemente 122 angeordnet. Je nachdem, wie weit das Kopfteil 80 hochgefahren wird, rutscht das Umlenkelement 120 in eine der Verrastausnehmungen 132, 134. In der Minimalhöhe des Kopfteils 80 ist das Umlenkelement 120 in den untersten Verrastausnehmungen 132, 134 angeordnet. In der Maximal-Kleinkindhöhe des Kopfteils 80 ist das Umlenkelement 120 in den obersten Verrastausnehmungen 132, 134 angeordnet. An einem oberen Ende sind die Führungselemente 122, in denen das Umlenkelement 120 geführt ist, jeweils schräg ausgebildet, um das Umlenkelement 120 von der Hochbewegung des Kopfteils 80 zu entkoppeln. Die Führungselemente 122 weisen an ihren oberen Enden jeweils eine schräg verlaufende Entkoppelmulde 144 auf. Die Entkoppelmulden 144 erstrecken sich nach hinten. Die Entkopplungsmulden 144 erstrecken sich dabei von dem Grundkörper 88 und den Verrastausnehmungen 132, 134 weg. Ist das Umlenkelement 120 in den Entkoppelmulden 144 angeordnet, kann das Mitnahmeelement 128 das Umlenkelement 120 überfahren.

Soll das Kopfteil 80 über die Maximal-Kleinkindhöhe hinaus hochbewegt werden, um ein entsprechend größeres Kind in dem Kindersitz 10 zu sichern, so darf das integrierte Gurtsystem 110 nicht mehr zur Sicherung des in dem Kindersitz 10 sitzenden Kindes verwendet werden. Um das integrierte Gurtsystem 110 an dem Kindersitz 10 zu verstauen, weist die Kindersitzvorrichtung eine Verstauvorrichtung 136 auf. Mittels der Verstauvorrichtung 136 ist das integrierte Gurtsystem 110 ab einer Höhe, die größer ist als die Maximal-Kleinkindhöhe, in dem Kindersitz 10 verstaubar. Die Verstauvorrichtung 136 weist einen ersten Stauraum 138 und einen zweiten Stauraum 140 auf, die jeweils zur Verstauung eines Teils eines rückenlehnenseitigen Gurtelements 112, 114, wie insbesondere des jeweiligen, mit dem Gurtelement 112, 114 verbundenen, als Gurtzunge ausgebildeten Formschlusselements 116, 118 vorgesehen sind. Die beiden Stauräume 138, 140 sind von dem Grundkörper 88 des Kopfteils 80 ausgebildet. Die Stauräume 138, 140 sind dabei als zumindest teilweise durch Wandungen begrenzte Hohlräume ausgebildet, wobei die Stauräume 138, 140 nach vorne und hinten hin geöffnet sind. Durch die Verstauvorrichtung 136 können die rückenlehnenseitigen Gurtelemente 112, 114 sowie die jeweiligen, mit dem Gurtelement 112, 114 verbundenen Formschlusselemente 116, 118 bei Nichtgebrauch verliersicher angeordnet werden. Die rückenlehnenseitigen Gurtelemente 112, 114 müssen bei Nichtgebrauch vorteilhaft nicht von dem Kindersitz 10 entfernt werden. Dabei können die rückenlehnenseitigen Gurtelemente 112, 114 jeweils über ihre Formschlusselemente 116, 118 in dem jeweiligen Stauraum 138, 140 verliersicher arretiert werden.

Zur verliersicheren Arretierung der als Gurtzungen ausgebildeten Formschlusselemente 116, 118 der rückenlehnenseitigen Gurtelemente 112, 114 sind in den Stauräumen 138, 140 der Verstauvorrichtung 136 jeweils Arretiermittel 184, 186 angeordnet. Die Arretiermittel 184, 186, die zur Sicherung der Formschlusselemente 116, 118 in den Stauräumen 138, 140 vorgesehen sind, sind als Rastnasen ausgebildet. Beim Einstecken der Formschlusselemente 116, 118 in die Stauräume 138, 140 werden die Arretiermittel 184, 186 zunächst elastisch ausgelenkt und rasten in die Formschlusselemente 116, 118 ein und sichern diese so formschlüssig in den Stauräumen 138, 140 der Verstauvorrichtung 136. Zum Lösen der Formschlusselemente 116, 118 der Gurtelemente 112, 114 aus den Stauräumen 138, 140 der Verstauvorrichtung 136 muss eine Demontagekraft auf die Formschlusselemente 116, 118 ausgeübt werden, die entgegen einer Verstaurichtung gerichtet ist, in der die Formschlusselemente 116, 118 in die Stauräume 138, 140 zur Verrastung geführt wurden. Durch Ziehen an den rückenlehnenseitigen Gurtelementen 112, 114 können die Formschlusselemente 116, 118 von den Arretiermitteln 184, 186 gelöst und so aus den Stauräumen 138, 140 der Verstauvorrichtung 136 entfernt werden.

Die Rückenlehneneinheit 72 umfasst eine Vorderplatte 166, die die Rückenlehneneinheit 72 nach vorne hin abschließt. Die Vorderplatte 166 ist, in Sitzrichtung gesehen, vor dem Grundkörper 88 des Kopfteils 80 angeordnet. Die Vorderplatte 166 ist dazu vorgesehen, die Stauräume 138, 140 in einem Betriebszustand, in dem das Kopfteil 80 niedriger angeordnet ist als die Maximal-Kleinkindhöhe, zu verschließen. Die Vorderplatte 166 weist zwei Ausnehmungen 168, 170 auf, die so angeordnet sind, dass sie die Stauräume 138, 140 freigeben, wenn das Kopfteil 80 in die Maximal-Kleinkindhöhe verfahren ist. Dadurch kann vorteilhaft erreicht werden, dass die rückenlehnenseitigen Gurtelemente 112, 114 sowie die jeweiligen, mit den Gurtelementen 112, 114 verbundenen Formschlusselemente 116, 118 erst dann in dem jeweiligen Stauraum 138, 140 der Verstauvorrichtung 136 verstaut werden können, wenn das Kopfteil 80 in der Maximal-Kleinkindhöhe angeordnet ist.

Die Verstauvorrichtung 136 umfasst einen dritten Stauraum 172. Der dritte Stauraum 172 ist dazu vorgesehen, dass das sitzbodenseitige Gurtelement 124 und das damit gekoppelte, als Gurtschloss ausgebildete Formschlusselement 126 darin verstaut werden können. Der Stauraum 172 ist von dem Schlitten 42 der Verstelleinheit 28 ausgebildet. Das als Gurtschloss ausgebildete Formschlusselement 126 kann in dem Stauraum 172 arretiert werden. Die Oberschale 26 des Sitzbodens 22 weist eine Ausnehmung 174 auf, die oberhalb des Stauraums 172 angeordnet ist. Durch die Ausnehmung 174 kann das sitzbodenseitige Gurtelement 124 und das damit gekoppelte, als Gurtschloss ausgebildete Formschlusselement 126 in den Stauraum 172 eingeführt werden. Zur Abdeckung der Ausnehmung 174 weist der Sitzboden 22 eine schwenkbare Klappe 176 auf, die in einem geschlossenen Zustand die Ausnehmung 174 verschließt und in einem geöffneten Zustand freigibt. Durch die schwenkbare Klappe 176 wird das als Gurtschloss ausgebildete Formschlusselement 126 in den Stauraum 172 fixiert, wenn die schwenkbare Klappe 176 geschlossen ist.

Die Verstauvorrichtung 136 umfasst einen vierten Stauraum 194 und einen fünften Stauraum 196. Der vierte und fünfte Stauraum 194, 196 sind dazu vorgesehen, die Gurtpolsterelemente 190, 192 in einem Nichtgebrauchszustand verliersicher aufzunehmen. Die Stauräume 194, 196 sind von dem Grundkörper 88 des Kopfteils 80 gebildet. Dabei sind die Stauräume 194, 196 angrenzend an die Stauräume 138, 140 zur Verstauung der Formschlusselemente 116, 118 der Gurtelemente 112, 114 angeordnet. Wird das integrierte Gurtsystem 110 ab einer Höhe des Kopfteils 80, die größer ist als die Maximal-Kleinkindhöhe, verstaut, werden die Gurtpolsterelemente 190, 192 von dem jeweiligen Gurtelement 112, 114 gelöst und in dem entsprechenden Stauraum 194, 196 untergebracht.

Ist das Kopfteil 80 bis in die Maximal-Kleinkindhöhe nach oben verfahren, stellt dies die maximale Höhe dar, in der ein in dem Kindersitz 10 sitzendes Kind noch mit dem integrierten Gurtsystem 110 in dem Kindersitz 10 gesichert werden darf. Die Verriegelungsvorrichtung 90 ist dazu vorgesehen, eine Benutzung des integrierten Gurtsystems 110 auf Betriebszustände zu beschränken, in denen das Kopfteil 80 zwischen der Minimalhöhe und der Maximal-Kleinkindhöhe angeordnet ist. Das Umlenkelement 120, das Mitnahmeelement 128 und die Führungselemente 122 sind dazu als Teil der Verriegelungsvorrichtung 90 ausgebildet. Wird das Kopfteil 80 über den Betätigungsarm 100 aus der Maximal-Kleinkindhöhe weiter nach oben bewegt, wird das Umlenkelement 120 zwischen dem Mitnahmeelement 128 und jeweiligen oberen Enden der Führungselemente 122, die unmittelbar an die obersten Verrastausnehmungen 132, 134 anschließen, eingeklemmt und sperrt so ein weiteres Hochfahren des Kopfteils 80 aus der Maximal-Kleinkindhöhe.

Die Verriegelungsvorrichtung 90 weist einen Ver- und Entriegelungsmechanismus 142 auf. Der Ver- und Entriegelungsmechanismus 142 ist dazu vorgesehen, das Kopfteil 80 in dem Betriebszustand, in dem das integrierte Gurtsystem 110 genutzt wird, auf die Maximal-Kleinkindhöhe zu begrenzen. Der Ver- und Entriegelungsmechanismus 142 ist dabei teilweise in den Stauräumen 138, 140 der Verstauvorrichtung 136 angeordnet. Die Arretiermittel 184, 186, mittels denen sich die Formschlusselemente 116, 118 der rückenlehnenseitigen Gurtelemente 112, 114 in den Stauräumen 138, 140 arretieren lassen, sind Teil des Ver- und Entriegelungsmechanismus 142. Dadurch sind die Verriegelungsvorrichtung 90 und die Verstauvorrichtung 136 teilweise funktionell miteinander verknüpft. Der Ver- und Entriegelungsmechanismus 142 weist einen Verriegelzustand und einen Entriegelzustand auf. In dem Verriegelzustand ist die Hochbewegung des Kopfteils 80 auf die Maximal-Kleinkindhöhe beschränkt. In einem Entriegelzustand des Ver- und Entriegelungsmechanismus 142 ist eine Hochbewegung des Kopfteils 80 über die Maximal-Kleinkindhöhe hinaus freigegeben. Der Ver- und Entriegelungsmechanismus 142 ist zweistufig ausgebildet. Der Ver- und Entriegelungsmechanismus 142 weist einen ersten Teilmechanismus 146 und einen zweiten Teilmechanismus 148 auf. Zur Erreichung des Entriegelzustands des Ver- und Entriegelungsmechanismus 142 müssen beide Teilmechanismen 146, 148 entriegelt werden. Die beiden Teilmechanismen 146, 148 sind im Wesentlichen identisch ausgebildet, weswegen im Folgenden lediglich der eine Teilmechanismus 146 näher beschrieben wird. Zur detaillierten Erläuterung des zweiten Teilmechanismus 148 kann die folgende Beschreibung des ersten Teilmechanismus 146 herangezogen werden. Der Teilmechanismus 146 weist ein Hebelelement 150 auf. Das Hebelelement 150 ist über eine Lagerstelle 162 mit dem Grundkörper 88 des Kopfteils 80 um eine Schwenkachse schwenkbar verbunden. Die Schwenkachse ist dabei in Querrichtung des Grundkörpers 88 ausgerichtet. Das Hebelelement 150 weist an seinem unteren Ende ein Formschlusselement 152 auf. Das Formschlusselement 152, das von dem unteren Ende des Hebelelements 150 gebildet wird, ist als eine Rasterhebung ausgebildet. Der Teilmechanismus 146 umfasst einen Anschlag 154 an dem das Formschlusselement 152 des Hebelelements 150 in einer Verriegelstellung des Teilmechanismus 146 anschlägt. Der Anschlag 154 ist von der Rückplatte 78 der Rückenlehneneinheit 72 ausgebildet. Der Anschlag 154 ist als ein oberes Ende einer Nut 156 ausgebildet, die von der Rückplatte 78 der Rückenlehneneinheit 72 ausgebildet wird. In der Maximal-Kleinkindhöhe des Kopfteils 80 erstreckt sich das Hebelelement 150 mit einem oberen Ende 158 bis hinter den Stauraum 138, dem der Teilmechanismus 146 zugeordnet ist. An seinem oberen Ende 158 bildet das Hebelelement 150 eine Anschlagsfläche 160 aus, die dazu vorgesehen ist, dass ein Formschlusselement 116, 118 eines rückenlehnenseitigen Gurtelements 112, 114 an dieser anschlägt, wenn das Formschlusselement 116, 118 zur Verstauung in den Stauraum 138 eingeführt und verrastet wird, um so das Hebelelement 150 auszulenken. Die Anschlagsfläche 160 weist dabei einen größeren Abstand zu der Lagerstelle 162 auf als das Formschlusselement 152. Der Teilmechanismus 146 umfasst ein Federelement 164. Das Federelement 164 ist zwischen dem Grundkörper 88 des Kopfteils 80 und dem unteren Ende des Hebelelements 150 angeordnet. Das Federelement 164 ist als eine Druckfeder ausgebildet, die das untere Ende des Hebelelements 150 von dem Grundkörper 88 wegdrückt. Das Federelement 164 bringt eine Federkraft auf, die das Formschlusselement 152, das das Hebelelement 150 ausbildet, in der Verriegelstellung des Teilmechanismus 146 in die Nut 156 und damit in der Maximal-Kleinkindhöhe gegen den Anschlag 154 drückt. Das Federelement 164 sorgt für ein betriebssicheres Eingreifen des Formschlusselements 152 an den Anschlag 154 in der Verriegelstellung des Teilmechanismus 146.

In einer Verriegelstellung des Teilmechanismus 146 ist das Hebelelement 150 in einer Ruhestellung. Das Formschlusselement 116 ist zur Entriegelung des Teilmechanismus 146 vorgesehen. Dazu wird das Formschlusselement 116 des rückenlehnenseitigen Gurtelements 112 in den Stauraum 138 eingeführt und lenkt das Hebelelement 150 dadurch aus. Das Formschlusselement 116 wird bis zu einer Endstellung, in der das Formschlusselement 116 durch das Arretiermittel 184 in dem Stauraum 138 einrastet, in den Stauraum 138 bewegt. Durch das Formschlusselement 116 wird das Hebelelement 150 gegen die Federkraft des Federelements 164 ausgelenkt und das Formschlusselement 152 bewegt sich aus der Nut 156 und löst sich dadurch von dem Anschlag 154. Dadurch ist der Teilmechanismus 146 in eine Entriegelstellung überführt worden. In der Entriegelstellung kann das Formschlusselement 152 den Anschlag 154 überfahren.

Das Hebelelement 150 weist ein zweites Formschlusselement 188 auf. Das zweite Formschlusselement 188 ist einstückig mit dem Hebelelement 150 ausgebildet. Dabei erstreckt sich das zweite Formschlusselement 188 in eine gleiche Richtung von dem Hebelelement 150 wie das erste Formschlusselement 152. Das zweite Formschlusselement 188 ist zwischen dem oberen Ende 158 und der Lagerstelle 162 angeordnet. Das zweite Formschlusselement 188 ist so ausgebildet, dass es in einer Ruhestellung des Hebelelements 150 den Anschlag 154 des Teilmechanismus 146 bei einer Höhenverstellung des Kopfteils 80 überfahren kann. In einer Höhe kleiner als die Maximal-Kleinkindhöhe ist das zweite Formschlusselement 188 dabei insbesondere nicht in der Nut 156 angeordnet. Dadurch kann das Kopfteil 80 bis in die Maximal-Kleinkindhöhe hochbewegt werden, wobei das zweite Formschlusselement 188 dabei den Anschlag 154 des Teilmechanismus 146 überfahren kann, bis das erste Formschlusselement 152 an dem Anschlag 154 anschlägt und so ein weiteres Hochfahren des Kopfteils 80 verhindert. In einer durch das Formschlusselement 116 ausgelenkten Stellung des Hebelelements 150 ist das zweite Formschlusselement 188 in Richtung des Anschlags 154 bewegt und kann den Anschlag 154 nicht mehr überfahren. Damit das zweite Formschlusselement 188 des Hebelelements 150 den Anschlag 154 überfahren kann, muss das Hebelelement 150 in seiner Ruhestellung sein. Nach einer Verstellung des Kopfteils 80 über die Maximal-Kleinkindhöhe hinaus, durch Entsperren des Teilmechanismus 146 durch Auslenken des Hebelelements 150 mittels des als Gurtzunge ausgebildeten Formschlusselements 116, schlägt das zweite Formschlusselement 188 des Hebelelements 150 bei einer Herabbewegung des Kopfteils 80 in der Maximal-Kleinkindhöhe an dem Anschlag 154 an und verhindert so ein weiteres Herabbewegen des Kopfteils 80 unter die Maximal-Kleinkindhöhe. Durch Entfernen des als Gurtzunge ausgebildeten Formschlusselements 116 des rückenlehnenseitigen Gurtelements 112 wird das Hebelelementen 150 in seine Ruhestellung verschwenkt, wodurch das erste Formschlusselement 152 des Hebelelements 150 wieder in die Nut 156 eingreift und das Kopfteil 80 so wieder auf die Maximal-Kleinkindhöhe beschränkt und das zweite Formschlusselement 188 den Anschlag 154 wieder überfahren kann.

Der zweite Teilmechanismus 148, der äquivalent ausgebildet ist, ist dazu vorgesehen, von dem Formschlusselement 118 des zweiten rückenlehnenseitigen Gurtelements 114 entriegelt zu werden. Sind beide Teilmechanismen 146, 148 durch das jeweilige Formschlusselement 116, 118 des entsprechenden rückenlehnenseitigen Gurtelements 112, 114 in eine Entriegelstellung gebracht, ist der Ver- und Entriegelungsmechanismus 142 in seine Entriegelstellung gebracht. Dadurch kann das Kopfteil 80 nun über die Maximal-Kleinkindhöhe hinaus hochbewegt werden. Ist das Kopfteil 80 für ein größeres Kind über die Maximal-Kleinkindhöhe hinaus hochbewegt, wird das in dem Kindersitz 10 sitzende Kind über den fahrzeugeigenen 3-Punkt-Sicherheitsgurt in dem Kindersitz 10 gesichert. Durch den Ver- und Entriegelungsmechanismus 142 ist sichergestellt, dass das interne Gurtsystem 110 nicht verwendet werden kann, wenn das Kopfteil 80 über die Maximal-Kleinkindhöhe hinausbewegt ist. Soll das Kopfteil 80 aus einer Höhe oberhalb der Maximal-Kleinkindhöhe wieder auf eine Höhe unterhalb der Maximal-Kleinkindhöhe bewegt werden, müssen die rückenlehnenseitigen Gurtelemente 112, 114 und die entsprechenden Formschlusselemente 116, 118 aus den Stauräumen 138, 140 entfernt werden und die Teilmechanismen 146, 148 so wieder in eine Verriegelstellung bringen. Dann kann das Kopfteil 80 wieder unter die Maximal-Kleinkindhöhe gebracht werden und das interne Gurtsystem 110 kann wieder verwendet werden.

Die Kindersitzvorrichtung weist eine zweite Verriegelungsvorrichtung 182 auf. Die zweite Verriegelungsvorrichtung 182 ist dazu vorgesehen, die Verstelleinheit 28 zur Verstellung des Sitzbodens 22 in der Sitzstellung des Sitzbodens 22 zu verriegeln. Die zweite Verriegelungsvorrichtung 182 und die Verstauvorrichtung 136 sind dabei teilweise funktionell miteinander verknüpft. Die Verriegelungsvorrichtung 182 weist einen Ver- und Entriegelmechanismus 178 auf. Der Ver- und Entriegelmechanismus 178 wird von dem als Gurtschloss ausgebildeten Formschlusselement 126 betätigt. Der Ver- und Entriegelmechanismus 178 ist dazu in dem Stauraum 172 der Verstauvorrichtung 136 angeordnet. Ist das als Gurtschloss ausgebildete Formschlusselement 126 in dem Stauraum 172 sachgemäß angeordnet, ist der Ver- und Entriegelmechanismus 178 in einer Verriegelstellung und die Verriegelungsvorrichtung 182 verriegelt die Verstelleinheit 28. Der Stauraum 172 und damit der Ver- und Entriegelmechanismus 178 ist von einem Durchgangsloch in der Betätigungsplatte 52 und einer Aufnahme in dem Schlitten 42 ausgebildet. Ist das als Gurtschloss ausgebildete Formschlusselement 126 in dem Stauraum 172 sachgemäß angeordnet, kann die Betätigungsplatte 52 nicht mehr zu dem Schlitten 42 bewegt werden und die Verstelleinheit 28 ist dadurch gesperrt. Dadurch kann der Sitzboden 22 nicht mehr zwischen seinen verschiedenen Stellungen verstellt werden. Ist das als Gurtschloss ausgebildete Formschlusselement 126 nicht in dem Stauraum 172 angeordnet, ist der Ver- und Entriegelmechanismus 178 in einer Entriegelstellung. Ist der Ver- und Entriegelmechanismus 178 in seiner Entriegelstellung, kann der Sitzboden 22 über die Verstelleinheit 28 verstellt werden.

Der Ver- und Entriegelmechanismus 178 weist ein Sperrelement 180 auf. Das Sperrelement 180 ist dazu vorgesehen, den Stauraum 172 in einem Betriebszustand zu sperren, in dem der Sitzboden 22 mittels der Verstelleinheit 28 aus seiner Sitzstellung geschwenkt ist. Das Sperrelement 180 ist drehbar zu dem Grundkörper 16 der Sitzbodeneinheit 20 gelagert. Ist der Sitzboden 22 mittels der Verstelleinheit 28 aus der Sitzstellung geschwenkt, dreht sich das Sperrelement 180 über den Stauraum 172 und versperrt diesen so. Dadurch wird gewährleistet, dass das als Gurtschloss ausgebildete Formschlusselement 126 lediglich in dem Stauraum 172 fixiert wird und so die Verstelleinheit 28 verriegelt, wenn der Sitzboden 22 in der Sitzstellung ausgerichtet ist.

Der Kindersitz 10 weist weiter mehrere Polstereinheiten auf, die in den Figuren lediglich schematisch dargestellt sind. Die Polstereinheiten bilden dabei eine Sitzfläche und eine Rückenlehnenfläche des Kindersitzes 10 aus und überdecken die Rückenlehneneinheit 72 sowie den Sitzboden 22. Die Polstereinheiten sind entsprechend dem Fachmann aus dem Stand der Technik bekannten Polstereinheiten ausgebildet und sollen deshalb nicht weiter erläutert werden.

Ferner weist die Kindersitzvorrichtung eine Signalvorrichtung 198 auf, die ein Signal ausgibt, sobald das Kopfteil 80 die Maximal-Kleinkindhöhe erreicht hat. Dabei ist die Signalvorrichtung 198 von den Teilmechanismen 146, 148 ausgebildet. Ist die Maximal-Kleinkindhöhe erreicht, schlagen die Formschlusselemente 152 der Hebelelemente 150 der Teilmechanismen 146, 148 an dem entsprechenden Anschlag 154 an und geben so ein akustisches und taktiles Signal aus, das einem Benutzer signalisiert, dass die Maximal-Kleinkindhöhe erreicht ist. Dadurch kann dem Benutzer vorteilhaft einfach vermittelt werden, dass das interne Gurtsystem 110 verstaut werden muss. Dabei ist es denkbar, dass die Signalvorrichtung 198 ein akustisches, ein taktiles und/oder ein visuelles Signal ausgibt. Dabei ist es denkbar, dass die Kindersitzvorrichtung zusätzlich eine Sensoreinheit aufweist, die einem Benutzer ein Signal ausgibt, dass ein in dem Kindersitz sitzendes Kind für die Sicherung mit dem integrierten Gurtsystem 110 ungeeignet ist. Dabei könnten beispielsweise elektronische Bauteile zum Einsatz kommen, die ein Gewicht des auf dem Kindersitz 10 sitzenden Kindes erfassen und über ein entsprechendes Ausgabemittel ein entsprechendes, für den Benutzer erkennbares Ausgangssignal bereitstellen.

### Bezugszeichen

- 10: Kindersitz
- 12: Isofix-Modul
- 14: Isofix-Konnektor
- 16: Grundkörper
- 18: Abstützfuß
- 20: Sitzbodeneinheit
- 22: Sitzboden
- 24: Außenschale
- 26: Oberschale
- 28: Verstelleinheit
- 30: Führungselement
- 32: Führungselement
- 34: Führungsnut
- 36: Führungsschiene
- 38: Führungsnut
- 40: Verriegelmodul
- 42: Schlitten
- 44: Wandung
- 46: Betätigungsmechanik
- 48: Arretierbolzen
- 50: Arretierbolzen
- 52: Betätigungsplatte
- 54: Führungselement
- 56: Führungselement
- 58: Nut
- 60: Nut
- 62: Formschlusselement
- 64: Formschlusselement
- 66: Griffelement
- 68: Öffnung
- 70: Verstellbolzen
- 72: Rückenlehneneinheit
- 74: Befestigungsträger
- 76: Befestigungsträger
- 78: Rückplatte
- 80: Kopfteil
- 82: Kopfstütze
- 84: Kopfstützelement
- 86: Kopfstützelement
- 88: Grundkörper
- 90: Verriegelungsvorrichtung
- 92: Rastschiene
- 94: Rastschiene
- 96: Rastelement
- 98: Rastelement
- 100: Betätigungsarm
- 102: Ausnehmung
- 104: Griffelement
- 106: Nut
- 108: Stiftelement
- 110: Gurtsystem
- 112: Gurtelement
- 114: Gurtelement
- 116: Formschlusselement
- 118: Formschlusselement
- 120: Umlenkelement
- 122: Führungselement
- 124: sitzbodenseitiges Gurtelement
- 126: Formschlusselement
- 128: Mitnahmeelement
- 130: Rückseite
- 132: Verrastausnehmung
- 134: Verrastausnehmung
- 136: Verstauvorrichtung
- 138: Stauraum
- 140: Stauraum
- 142: Ver- und Entriegelungsmechanismus
- 144: Entkoppelmulde
- 146: Teilmechanismus
- 148: Teilmechanismus
- 150: Hebelelement
- 152: Formschlusselement
- 154: Anschlag
- 156: Nut
- 158: Ende
- 160: Anschlagsfläche
- 162: Lagerstelle
- 164: Federelement
- 166: Vorderplatte
- 168: Ausnehmung
- 170: Ausnehmung
- 172: Stauraum
- 174: Ausnehmung
- 176: Klappe
- 178: Ver- und Entriegelmechanismus
- 180: Sperrelement
- 182: Verriegelungsvorrichtung
- 184: Arretiermittel
- 186: Arretiermittel
- 188: Formschlusselement
- 190: Gurtpolsterelement
- 192: Gurtpolsterelement
- 194: Stauraum
- 196: Stauraum
- 198: Signalvorrichtung

## Patentansprüche

1. Kindersitzvorrichtung mit einer Sitzbodeneinheit (20), die eine Sitz- und/oder Liegefläche für ein Kind bereitstellt, mit einem zu der Sitzbodeneinheit (20) in zumindest einer Richtung verstellbaren Kopfteil (80), das zur Ausbildung eines zumindest für den Kopf des Kindes vorgesehenen Auflagebereichs vorgesehen ist, mit zumindest einer Verriegelungsvorrichtung (90), die dazu vorgesehen ist, das Kopfteil (80) in zumindest zwei verschiedenen Stellungen zu der Sitzbodeneinheit (20) zu verriegeln, mit einem integrierten Gurtsystem (110), welches zumindest zur Sicherung des Kindes bis zu einer Maximal-Kleinkindhöhe vorgesehen ist, und mit einer Verstauvorrichtung (136), mittels der das integrierte Gurtsystem (110) ab einer Höhe, die größer ist als die Maximal-Kleinkindhöhe, verstaubar ist, wobei die Verriegelungsvorrichtung (90) und die Verstauvorrichtung (136) zumindest teilweise funktionell miteinander verknüpft sind, **gekennzeichnet durch** wenigstens eine Verstelleinheit (28), mittels der wenigstens ein Teil der Sitzbodeneinheit (20) zwischen wenigstens einer Sitz- und einer Schlafstellung verstellbar ist, und durch eine zweite Verriegelungsvorrichtung (182), die dazu vorgesehen ist, die Verstelleinheit (28) in wenigstens der Sitzstellung zu sperren, wobei die zweite Verriegelungsvorrichtung (182) und die Verstauvorrichtung (136) zumindest teilweise funktionell miteinander verknüpft sind.

2. Kindersitzvorrichtung nach Anspruch 1, **dadurch gekennzeichnet, dass** die Verriegelungsvorrichtung (90) wenigstens einen Ver- und Entriegelmechanismus (142) aufweist, welcher zumindest teilweise in einem Stauraum (138, 140) der Verstauvorrichtung (136) angeordnet ist.

3. Kindersitzvorrichtung nach Anspruch 2, **dadurch gekennzeichnet, dass** das integrierte Gurtsystem (110) wenigstens ein Formschlusselement (116, 118) zum Schließen des Gurtsystems (110) aufweist, welches dazu vorgesehen ist, den Ver- und Entriegelmechanismus (142) zumindest teilweise zu entriegeln.

4. Kindersitzvorrichtung zumindest nach Anspruch 2, **dadurch gekennzeichnet, dass** das Gurtsystem (110) wenigstens ein Umlenkelement (120) aufweist, welches zur Umlenkung von zumindest einem rückenlehnenseitigen Gurtelement (112, 114) vorgesehen ist und zwischen einer Minimalhöhe und einer Maximal-Kleinkindhöhe in wenigstens einem Führungselement (122) verschiebbar ist.

5. Kindersitzvorrichtung nach Anspruch 4, **dadurch gekennzeichnet, dass** das wenigstens eine Umlenkelement (120) dazu vorgesehen ist, in der Maximal-Kleinkindhöhe von einer Hochbewegung des Kopfteils (80) entkoppelt zu werden.

6. Kindersitzvorrichtung nach Anspruch 4 oder 5, **dadurch gekennzeichnet, dass** das wenigstens eine Führungselement (122) an einem oberen Ende zur Entkopplung des Umlenkelements (120) schräg ausgebildet ist.

7. Kindersitzvorrichtung zumindest nach Anspruch 4, **gekennzeichnet durch** zumindest eine Rückenlehneneinheit (72), die mit der Sitzbodeneinheit (20) gekoppelt ist und das wenigstens eine Führungselement (122) ausbildet, in dem das wenigstens eine Umlenkelement (120) geführt ist.

8. Kindersitzvorrichtung nach einem der vorhergehenden Ansprüche, **dadurch gekennzeichnet, dass** die zweite Verriegelungsvorrichtung (182) wenigstens einen Ver- und Entriegelmechanismus (178) aufweist, welcher zumindest teilweise in einem weiteren Stauraum (172) der Verstauvorrichtung (136) angeordnet ist.

9. Kindersitzvorrichtung nach Anspruch 8, **dadurch gekennzeichnet, dass** das integrierte Gurtsystem (110) wenigstens ein als Gurtschloss ausgebildetes Formschlusselement (126) aufweist, welches dazu vorgesehen ist, zur Verriegelung der zweiten Verriegelungsvorrichtung (182) in dem Stauraum (172) der Verstauvorrichtung (136) eingerastet zu werden.

10. Kindersitzvorrichtung zumindest nach Anspruch 8, **dadurch gekennzeichnet, dass** der Ver- und Entriegelmechanismus (178) wenigstens ein Sperrelement (180) aufweist, das den weiteren Stauraum (172) der Verstauvorrichtung (136) in wenigstens einem Betriebszustand versperrt.

11. Kindersitzvorrichtung zumindest nach Anspruch 2, **dadurch gekennzeichnet, dass** der Ver- und Entriegelmechanismus (142) dazu vorgesehen ist, das Kopfteil (80) in einem ersten Gebrauchszustand, in dem das integrierte Gurtsystem (110) genutzt wird, auf eine Maximal-Kleinkindhöhe zu begrenzen.

12. Kindersitzvorrichtung zumindest nach Anspruch 8, **dadurch gekennzeichnet, dass** der Ver- und Entriegelmechanismus (142) bei einer Entriegelung dazu vorgesehen ist, das Kopfteil (80) über die Maximal-Kleinkindhöhe hinaus freizugeben.

13. Kindersitz mit einer Kindersitzvorrichtung nach einem der vorhergehenden Ansprüche.

## Claims

1. Child seat device with a seat bottom unit (20) providing a sitting and/or lie-down surface for a child, with a head part (80), which is adjustable relative to the seat bottom unit (20) in at least one direction and is configured to implement a support region that is intended at least for the child's head, with at least one locking device (90) configured to lock the head part (80) in at least two different positions relative to the seat bottom unit (20), with an integral belt system (110) configured at least for safeguarding the child up to a maximum toddler height, and with a stowage device (136), by which the integral belt system (110) can be stowed from a height that is greater than the maximum toddler height, wherein the locking device (90) and the stowage device (136) are at least partly linked with one another function-wise,
**characterised by** at least one adjustment unit (28), by means of which at least a portion of the seat bottom unit (20) is adjustable between at least one sitting position and a sleep position,
and by a second locking device (182) configured to block the adjustment unit (28) at least in the sitting position,
wherein the second locking device (182) and the stowage device (136) are at least partly linked with one another function-wise.

2. Child seat device according to claim 1, **characterised in that** the locking device (90) comprises at least one locking and unlocking mechanism (142), which is arranged at least partly in a stowage space (138, 140) of the stowage device (136).

3. Child seat device according to claim 2, **characterised in that** the integral belt system (110) comprises at least one form-fit element (116, 118) for closing the belt system (110), the form-fit element (116, 118) being configured to at least partly unlock the locking and unlocking mechanism (142).

4. Child seat device at least according to claim 2, **characterised in that** the belt system (110) comprises at least one deflection element (120), which is configured for a deflection of at least one backrest-side belt element (112, 114) and is displaceable, in at least one guiding element (122), between a minimum height and a maximum toddler height.

5. Child seat device according to claim 4, **characterised in that** the at least one deflection element (120) is configured, in the maximum toddler height, to be decoupled from an upwards-movement of the head part (80).

6. Child seat device according to claim 4 or 5, **characterised in that** the at least one guiding element (122) is implemented to be bevelled at an upper end for the purpose of a decoupling the deflection element (120).

7. Child seat device at least according to claim 4, **characterised by** at least one backrest unit (72), which is coupled with the seat bottom unit (20) and implements the at least one guiding element (122) in which the at least one deflection element (120) is guided.

8. Child seat device according to one of the preceding claims, **characterised in that** the second locking device (182) comprises at least one locking and unlocking mechanism (178), which is arranged at least partly in a further stowage space (172) of the stowage device (136).

9. Child seat device according to claim 8, **characterised in that** the integral belt system (110) comprises at least one form-fit element (126), which is embodied as a belt lock and is configured to be latched in the stowage space (172) of the stowage device (136) for the purpose of a locking of the second locking device (182).

10. Child seat device at least according to claim 8, **characterised in that** the locking and unlocking mechanism (178) comprises at least one blocking element (180), which blocks the further stowage space (172) of the stowage device (136) in at least one operating state.

11. Child seat device at least according to claim 2, **characterised in that** the locking and unlocking mechanism (142) is configured to delimit the head part (80) to a maximum toddler height in a first usage state, in which the integral belt system (110) is utilised.

12. Child seat device at least according to claim 8, **characterised in that,** in unlocking, the locking and unlocking mechanism (142) is configured to release the head part (80) beyond the maximum toddler height.

13. Child seat with a child seat device according to one of the preceding claims.

## Revendications

1. Dispositif de siège enfant, avec une unité fond de siège (20) fournissant une surface à s'asseoir ou se coucher pour un enfant, avec une têtière (80) qui est ajustable en au moins une direction par rapport à l'unité fond de siège (20) et est prévue à réaliser une zone de support au moins pour la tête de l'enfant, avec au moins un dispositif à verrouillage (90) prévu pour verrouiller la têtière (80) dans au moins deux positions différentes par rapport à l'unité fond de siège (20), avec un système intégral de sangle(s) (110), qui est prévu au moins pour une sauvegarde de l'enfant jusqu'à une hauteur maximale de jeune enfant, et avec un dispositif de rangement (136), par le biais duquel le système intégral de sangle(s) (110) peut être rangé à partir d'une hauteur dépassant la hauteur maximale de jeune enfant, le dispositif à verrouillage (90) et le dispositif de rangement (136) étant reliés au moins partiellement en termes de fonction,
**caractérisé par** au moins une unité d'ajustement (28), par le biais de laquelle au moins une portion de l'unité fond de siège (20) est ajustable entre au moins une position assise et une position à dormir,
et par un deuxième dispositif à verrouillage (182) prévu à bloquer l'unité d'ajustement (28) au moins dans la position assise,
le deuxième dispositif à verrouillage (182) et le dispositif de rangement (136) étant reliés l'un à l'autre au moins partiellement en termes de fonction.

2. Dispositif de siège enfant selon la revendication 1, **caractérisé en ce que** le dispositif à verrouillage (90) comporte au moins un mécanisme à verrouillage et déverrouillage (142), qui est disposé au moins partiellement dans un espace de rangement (138, 140) du dispositif de rangement (136).

3. Dispositif de siège enfant selon la revendication 2, **caractérisé en ce que** le système intégral de sangle(s) (110) comporte au moins un élément de liaison par forme (116, 118) pour fermer le système de sangle(s) (110), ledit élément de liaison par forme (116, 118) étant prévu pour au moins partiellement déverrouiller le mécanisme à verrouillage et déverrouillage (142).

4. Dispositif de siège enfant selon la revendication 2, **caractérisé en ce que** le système de sangle(s) (110) comporte au moins un élément défléchissant (120), qui est prévu pour une déflexion d'au moins un élément sangle (112, 114) de côté dossier et qui est déplaçable dans au moins un élément de guidage (122) entre une hauteur minimale et une hauteur maximale de jeune enfant.

5. Dispositif de siège enfant selon la revendication 4, **caractérisé en ce que** l'au moins un élément défléchissant (120) est prévu, en hauteur maximale de jeune enfant, à être découplé d'un mouvement en haut de la têtière (80).

6. Dispositif de siège enfant selon l'une quelconque des revendications 4 ou 5, **caractérisé en ce que** l'au moins un élément de guidage (122) est biseauté à une extrémité supérieure pour le bût d'un découplage de l'élément défléchissant (120).

7. Dispositif de siège enfant au moins selon la revendication 4, **caractérisé par** au moins une unité dossier (72) raccordée avec l'unité fond de siège (20) et implémentant l'au moins un élément de guidage (122), dans lequel l'au moins un élément défléchissant (120) est guidé.

8. Dispositif de siège enfant selon l'une quelconque des revendications précédentes, **caractérisé en ce que** le deuxième dispositif à verrouillage (182) comporte au moins un mécanisme à verrouillage et déverrouillage (178), qui est disposé au moins partiellement dans un autre espace de rangement (172) du dispositif de rangement (136).

9. Dispositif de siège enfant selon la revendication 8, **caractérisé en ce que** le système intégral de sangle(s) (110) comporte au moins un élément de liaison par forme (126), qui est implémenté comme boucle de sangle et est prévu à être encliqueté dans l'espace de rangement (172) du dispositif de rangement (136) pour un verrouillage du deuxième dispositif à verrouillage (182).

10. Dispositif de siège enfant au moins selon la revendication 8, **caractérisé en ce que** le mécanisme à verrouillage et déverrouillage (178) comporte au moins un élément de blocage (180) bloquant, en au moins un état d'opération, l'autre espace de rangement (172) du dispositif de rangement (136).

11. Dispositif de siège enfant au moins selon la revendication 2, **caractérisé en ce que** le mécanisme à verrouillage et déverrouillage (142) est prévu pour délimiter la têtière (80), en premier état d'opération, dans lequel le système intégral de sangle(s) (110) est utilisé, à une hauteur maximale de jeune enfant.

12. Dispositif de siège enfant au moins selon la revendication 8, **caractérisé en ce qu'en** déverrouillage, le mécanisme à verrouillage et déverrouillage (142) est prévu pour libérer la têtière (80) au-delà de la hauteur maximale de jeune enfant.

13. Siège enfant avec un dispositif de siège enfant selon l'une quelconque des revendications précédentes.
